(19)

Europäisches
Patentamt
European
Patent Office
Office européen
des brevets

(11)  **EP 4 610 701 A1**

(12)  **EUROPEAN PATENT APPLICATION**

(43) Date of publication:
   **03.09.2025   Bulletin 2025/36**

(21) Application number: **25160733.9**

(22) Date of filing: **27.02.2025**

(51) International Patent Classification (IPC):
   **G02B 1/14** *(2015.01)*      **G02B 1/18** *(2015.01)*
   **B32B 17/10** *(2006.01)*     **B32B 27/08** *(2006.01)*
   **C08G 73/10** *(2006.01)*     **C09D 179/08** *(2006.01)*
   **G09F 9/30** *(2006.01)*      **C03C 17/34** *(2006.01)*

(52) Cooperative Patent Classification (CPC):
   **G02B 1/14; B32B 17/10; B32B 27/08; C03C 15/00;
   C03C 17/3405; C03C 21/002; C08G 73/14;
   C09D 179/08; G02B 1/18; G09F 9/301;
   C03C 2217/78**

(84) Designated Contracting States:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Designated Extension States:
   **BA**
   Designated Validation States:
   **GE KH MA MD TN**

(30) Priority:  **29.02.2024   KR 20240030080**

(71) Applicant: **Dongwoo Fine-Chem Co., Ltd.
   Iksan-si, Jeollabuk-do 54631 (KR)**

(72) Inventors:
   • **HONG, Seungbaek
     54631 Iksan-si (KR)**
   • **CHOI, Jeongmin
     54631 Iksan-si (KR)**
   • **KIM, Sung Min
     54631 Iksan-si (KR)**

(74) Representative: **V.O.
   P.O. Box 87930
   2508 DH Den Haag (NL)**

(54)  **OPTICAL LAMINATE AND IMAGE DISPLAY DEVICE HAVING THE SAME**

(57)    The present invention provides an optical laminate comprising a glass substrate, a primer layer formed on the glass substrate to cover an upper surface and side surfaces of the glass substrate, a base resin layer formed on the primer layer to cover an upper surface and side surfaces of the primer layer, and a functional coating layer formed on the base resin layer, wherein the glass substrate is an ultra-thin glass having a thickness of less than 100 μm, the optical laminate has a pencil hardness of 2H or more throughout the optical laminate, and the ratio of the total thickness of the primer layer, the base resin layer, and the functional coating layer to the thickness of the glass substrate is controlled in a certain range, and an image display device having the same. The optical laminate according to the present invention has excellent pencil hardness properties while securing bending resistance without causing curling, thus providing excellent processability, and prevents the glass substrate from breaking due to an external impact, and prevents the shattering of glass fragments even if broken.

Fig. 1

EP 4 610 701 A1

## Description

### Field of the disclosure

The present invention relates to an optical laminate and an image display device having the same. More particularly, the present invention relates to an optical laminate of a glass substrate having excellent pencil hardness properties while securing bending resistance without causing curling, thus providing excellent processability, and preventing the glass substrate from breaking due to an external impact, and preventing the shattering of glass fragments even if broken, and to an image display device having the same.

### Background

Recent advances in display technology have led to the development of foldable, rollable, and stretchable displays. In order to protect these various types of displays, research on ultra-thin glass (UTG) with improved flexible properties is being actively conducted.

These ultra-thin glasses require excellent bending strength to be used in various types of displays due to their flexible nature. In addition, to improve display quality, the surface roughness needs to be improved.

In general, in order to reduce the likelihood of scratches on the glass surface of the window glass during display use and the likelihood of breakage from drops during use, window glass used in mobile displays is enhanced for strength using ion-substituted chemical strengthening.

For example, Korean Patent Publication No. 10-1999-0042313 discloses a method for strengthening glass for display.

However, ultra-thin glass is so thin that a protective film is attached with a soft adhesive to prevent shattering even with this chemical strengthening treatment. However, this leads to problems such as pencil hardness being weakened and leaving marks when using a pen.

Alternatively, when a coating layer of resin material is formed on the ultra-thin glass to prevent shattering or improve surface hardness, the shrinkage stress due to the hardening of the coating layer causes curling, which reduces the processability.

In addition, even if a coating layer is formed on the ultra-thin glass, the side is not protected. Accordingly, if an external impact is applied to the side during the manufacturing process, the glass substrate is likely to be broken and glass fragments may shatter.

### Summary

It is an object of the present invention to provide an optical laminate with a glass substrate having excellent pencil hardness properties while securing bending resistance without causing curling, thus providing excellent processability, and preventing the glass substrate from breaking due to an external impact, and preventing the shattering of glass fragments even if broken.

Another object of the present invention is to provide an image display device having the optical laminate.

According to an aspect, the present invention provides an optical laminate comprising:

a glass substrate;
a primer layer formed on the glass substrate to cover an upper surface and side surfaces of the glass substrate;
a base resin layer formed on the primer layer to cover an upper surface and side surfaces of the primer layer; and
a functional coating layer formed on the base resin layer, wherein
the glass substrate is an ultra-thin glass having a thickness of less than 100 $\mu$m,
the optical laminate has a pencil hardness of 2H or more throughout the optical laminate, and
the optical laminate satisfies the following equation:

$$0.1 \leq d2/d1 \leq 0.4$$

wherein,

d1 is a thickness of the glass substrate, and
d2 is a total thickness of the primer layer, base resin layer, and functional coating layer.

In one embodiment of the present invention, the primer layer may be formed to cover the entire surface of the glass substrate.

In one embodiment of the present invention, the base resin layer may be formed to cover the entire surface of the primer layer.

The optical laminate according to one embodiment of the present invention may have a total thickness of less than 120 μm.

In one embodiment of the present invention, the primer layer may be formed from a composition for forming a primer layer comprising at least one resin among a polyurethane resin and a polyester resin.

In one embodiment of the present invention, the primer layer may be formed from a composition for forming a primer layer comprising a waterborne polyurethane resin and a stabilizer, and the stabilizer may comprise a primary heat stabilizer and a secondary heat stabilizer.

In one embodiment of the present invention, the primary heat stabilizer may be at least one selected from a phenol-based heat stabilizer and an amine-based heat stabilizer, and the secondary heat stabilizer may be at least one selected from a phosphorus-based heat stabilizer and a sulfur-based heat stabilizer.

In one embodiment of the present invention, the base resin layer may be formed from a composition for forming a base resin layer comprising at least one resin among a polyimide resin and a polyamideimide resin.

In one embodiment of the present invention, the base resin layer may have an elastic modulus of 3.3 to 5.2 GPa.

In one embodiment of the present invention, the functional coating layer may be a hard coating layer.

In one embodiment of the present invention, the hard coating layer may be formed from a hard coating composition comprising a light-transmitting resin, a fluorine-based UV-curable functional group-containing compound, a photoinitiator, and a solvent.

According to another aspect, the present invention provides an image display device having the optical laminate.

According to yet another aspect, the present invention provides a window of a flexible display having the optical laminate.

According to still another aspect, the present invention provides a polarizing plate having the optical laminate.

According to yet another aspect, the present invention provides a touch sensor having the optical laminate.

According to still another aspect, the present invention provides a transmittance tunable optical laminate having the optical laminate.

According to yet another aspect, the present invention provides a smart window having the transmittance tunable optical laminate.

The present invention has a number of advantageous effects.

The optical laminate according to one embodiment of the present invention has protected sides to prevent the glass substrate from breaking due to an external impact, and to prevent shattering of glass fragments even if it does break. Furthermore, the optical laminate according to the present invention has a structure in which the primer layer, the base resin layer, and the functional coating layer are sequentially laminated on the ultra-thin glass so that the ratio of the total thickness of the primer layer, the base resin layer, and the functional coating layer to the thickness of the glass substrate is controlled to a certain range, so that the pencil hardness property is excellent and the bending resistance is secured without causing curling, thus providing excellent processability. In particular, the optical laminate according to one embodiment of the present invention exhibits a pencil hardness of 2H or more and does not leave marks when using a pen.

## Short description of the drawings

These and further aspects of the present disclosure will be explained in greater detail by way of example and with reference to the accompanying drawings in which:

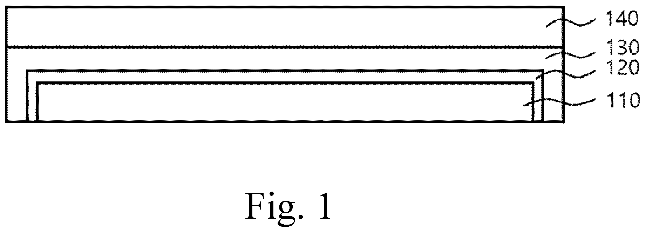

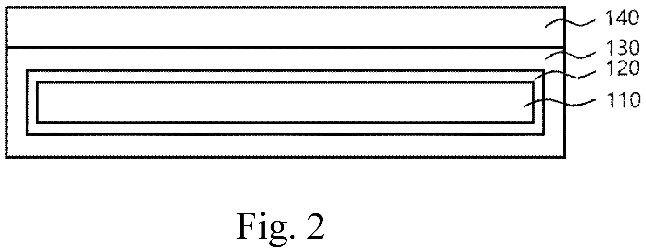

FIGS. 1 and 2 are schematic cross-sectional views of optical laminates according to embodiments of the present invention.

The figures are neither drawn to scale nor proportioned. Generally, identical components are denoted by the same reference numerals in the figures.

## Detailed description of embodiments

The present disclosure will be described in terms of specific embodiments, which are illustrative of the disclosure and not to be construed as limiting. It will be appreciated by persons skilled in the art that the present disclosure is not limited by what has been particularly shown and/or described and that alternatives or modified embodiments could be developed in the light of the overall teaching of this disclosure. The drawings described are only schematic and are non-limiting.

Reference throughout this specification to "one embodiment" or "an embodiment" means that a particular feature, structure or characteristic described in connection with the embodiments is included in one or more embodiment of the present disclosure. Thus, appearances of the phrases "in one embodiment" or "in an embodiment" in various places throughout this specification are not necessarily all referring to the same embodiment. Furthermore, the particular features, structures or characteristics may be combined in any suitable manner, as would be apparent to one ordinary skill in the art from this disclosure, in one or more embodiments.

Hereinafter, the present invention will be described in more detail.

One embodiment of the present invention relates to an optical laminate comprising:

> a glass substrate;
> a primer layer formed on the glass substrate to cover an upper surface and side surfaces of the glass substrate;
> a base resin layer formed on the primer layer to cover an upper surface and side surfaces of the primer layer; and
> a functional coating layer formed on the base resin layer, wherein
> the glass substrate is an ultra-thin glass having a thickness of less than 100 $\mu$m,
> the optical laminate has a pencil hardness of 2H or more throughout the optical laminate, and
> the optical laminate satisfies the following equation:

$$0.1 \leq d2/d1 \leq 0.4$$

> wherein,
>
> > d1 is a thickness of the glass substrate, and
> > d2 is a total thickness of the primer layer, base resin layer, and functional coating layer.

According to one embodiment of the present invention, the optical laminate has a d2/d1 value of 0.1 to 0.4, preferably 0.1 to 0.3.

In the present invention, d1 is the thickness of the glass substrate, and d2 is the total thickness of the primer layer, the base resin layer, and the functional coating layer.

Specifically, in the case where the primer layer is formed on the glass substrate to cover only the upper surface and side surfaces of the glass substrate, and the base resin layer is formed on the primer layer to cover only the upper surface and side surfaces of the primer layer, d2 is the total thickness of the primer layer, the base resin layer, and the functional coating layer present on the upper surface of the glass substrate.

When it has a structure in which the primer layer is formed on the glass substrate to cover the entire surface of the glass substrate, and the base resin layer is formed on the primer layer to cover the entire surface of the primer layer, d2 is the sum of the total thickness of the primer layer, the base resin layer, and the functional coating layer present on the upper surface of the glass substrate, and the total thickness of the primer layer and the base resin layer present on the lower surface of the glass substrate.

If the d2/d1 value is less than 0.1, the hardness property may be reduced to the extent that the lower glass substrate may break when measuring the pencil hardness property, and if the d2/d1 value exceeds 0.4, the curl property may be poor.

According to one embodiment of the present invention, the optical laminate has a pencil hardness of 2H or higher, preferably 4H or higher, throughout the optical laminate.

The pencil hardness is defined as the hardness of the pencil used in the test when, after fixing the optical laminate with the functional coating layer on top, the pencil hardness test is repeated five times with a load of 750gf on a length of 1cm on the functional coating layer side, and no apparent abnormalities such as scratches are recognized at least 4 times during the test. For example, if a pencil with a hardness of 2H is used to perform five test maneuvers, and no external abnormalities are recognized at least four times, the material has a pencil hardness of 2H or higher.

If the pencil hardness of the entire optical laminate is less than 2H, the pen may leave indentation marks, or the indentation may take a long time to recover.

The optical laminate according to one embodiment of the present invention may have a total thickness of less than 120 $\mu$m, for example, at least 35 $\mu$m and less than 120 $\mu$m. If the total thickness of the optical laminate is 120 $\mu$m or more, it may be difficult to secure bending resistance.

The optical laminate according to one embodiment of the present invention has a structure in which the primer layer is formed on the glass substrate to cover the upper surface and side surfaces of the glass substrate, and the base resin layer is formed on the primer layer to cover the upper surface and side surfaces of the primer layer, thereby preventing the glass substrate from being broken due to an external impact, particularly the external impact applied to the side surface of the glass substrate, and preventing glass fragments from shattering even if the glass substrate is broken.

In addition, the optical laminate according to one embodiment of the present invention has a structure in which the primer layer, the base resin layer, and the functional coating layer are sequentially laminated on the glass substrate which is an ultra-thin glass so that the ratio of the total thickness of the primer layer, the base resin layer, and the functional coating layer to the thickness of the glass substrate is controlled within a specific range, thereby ensuring excellent pencil hardness properties and bending resistance while preventing curling, thereby providing excellent processability.

In particular, the optical laminate according to one embodiment of the present invention exhibits a pencil hardness of 2H or higher, so that no indentation marks are left when a pen is used.

In addition, the optical laminate according to one embodiment of the present invention can secure bending properties even at a radius of curvature of 3 mm.

Moreover, the optical laminate according to one embodiment of the present invention exhibits antifouling properties, wear resistance, and chemical resistance.

FIG. 1 and FIG. 2 are structural cross-sectional views of optical laminates according to embodiments of the present invention, respectively.

Referring to FIG. 1, an optical laminate 100 according to one embodiment of the present invention includes a glass substrate 110, a primer layer 120, a base resin layer 130, and a functional coating layer 140 that are sequentially laminated, and the primer layer 120 is formed on the glass substrate 110 to cover the upper surface and side surfaces of the glass substrate 110, and the base resin layer 130 is formed on the primer layer 120 to cover the upper surface and side surfaces of the primer layer 120.

Referring to FIG. 2, an optical laminate 100 according to one embodiment of the present invention includes a glass substrate 110, a primer layer 120, a base resin layer 130, and a functional coating layer 140 that are sequentially laminated, and the primer layer 120 is formed to cover the entire surface of the glass substrate 110, and the base resin layer 130 is formed to cover the entire surface of the primer layer 120.

Hereinafter, each component of the optical laminate will be described in detail.

The glass substrate 110 is an ultra-thin glass (UTG) having a thickness of less than 100μm. For example, the thickness of the glass substrate 110 is at least 10μm and less than 100μm, preferably 20 to 95μm, more preferably 30 to 90μm.

If the thickness of the glass substrate 110 is greater than 100μm, the bending resistance may be reduced.

The ultra-thin glass may comprise one or more selected from the group consisting of aluminoborosilicate, borosilicate, alkaline lead silicate, soda lime, lithium aluminosilicate and aluminosilicate, preferably one or more selected from the group consisting of soda lime, lithium aluminosilicate and aluminosilicate.

The ultra-thin glass may be a cell-by-cell cut of the original sheet, in which the cut surfaces, i.e., the side surfaces of the ultra-thin glass, may be unbent and vertical, and may be polished to have a uniform side roughness. The polished ultra-thin glass may have an edge at the connection of the top surface and the side surface due to the polishing. The edge may be tapered or curved.

The ultra-thin glass may be manufactured by a manufacturing method described later, but is not limited thereto.

The method of manufacturing the ultra-thin glass may comprise the steps of cutting the original sheet glass into cells; polishing the cut surfaces of the cells; etching the polished cells; and healing the polished cut surfaces of the cells.

Further, the method of manufacturing ultra-thin glass may further comprise, after the step of healing, the steps of cleaning; chemically strengthening; and/or chemically polishing.

## Step of cutting an original sheet glass into cells

First, a plurality of cells are prepared by cutting the original sheet glass into cells.

The step of cutting the original sheet glass into cells is to form the original sheet glass into a shape that matches the design of the device to be used, and it may be the step of cutting the original sheet glass to form a plurality of cells. This step may be performed without laminating the original sheet glass into a plurality of layers. This has the advantage of enabling cell traceability in the event of a defect, simplifying the manufacturing process by omitting the lamination process, reducing the defect rate due to residues that may occur during the lamination process, and enabling freedom in selecting the shape of the glass side surfaces.

The cutting step is not particularly limited as long as it can form a plurality of cells by cutting the original sheet glass, and in one embodiment, the cutting step may be using a diamond cutting wheel or a CNC cutting machine equipped with a laser to form a plurality of cells having a certain shape.

## Step of polishing the cut surface of the unit cell

Then, the method of manufacturing the ultra-thin glass further comprises the step of polishing the cut surface of the cells.

The polishing may preferably be a physical polishing, most preferably a physical polishing so that the cut surface of the cells has a round shape. The cut surface of the cell refers to a side surface of the cell. In this case, the thickness of the cut cell may be the same as the thickness of the original sheet glass.

The physical polishing comprises physically polishing the chipping of the cut surface after the cutting step, while simultaneously machining the cell side surface to a desired shape. In this case, the thickness of the cut cell may be the same as the thickness of the original sheet glass before cutting.

The polished cut surface, i.e., the side surface of the cell, may have a gently rounded shape with a predetermined curvature in terms of stability to reduce the possibility of breakage during post-processing.

The physical polishing step is not particularly limited as long as it can physically polish chippings generated during cutting. In one embodiment, it may be performed by including a roughing step of grinding the cut surface of the cut cell using a chamfering tool of 400 mesh or less; a grinding step of polishing the cut surface of the cell that has undergone the roughing step using a chamfering tool of about 500 to 800 mesh; and a finishing step of polishing the cut surface of the cell that has undergone the grinding step using a chamfering tool of 1200 mesh or more.

Steps of etching the polished cell and healing the polished cut surface of the polished cell

The method may then comprise etching the polished cell and healing the polished cut surface of the polished cell. The step may include performing the steps of etching the polished cell and healing the polished cut surface of the polished cell simultaneously. Further, the healed cut surface refers to the side surface of the ultra-thin glass cell that is finally manufactured.

In the healing step, the polished cell may be etched without any protective material, such as resin or film, to prevent impact on the glass during the process or to mask it against the etchant.

The polished cells can be made ultra-thin through a chemical etching process while simultaneously healing the polished cut surfaces of the cell to obtain a cell-by-cell ultra-thin glass.

Specifically, the step of etching the polished cells includes, but is not limited to, chemical etching. The etching step of the polished cells allows the cells to be ultra-thin.

The ultra-thinning means a process of thinning the glass to a thickness of less than $100\mu m$.

Although the etching of the polished cell and the healing of the polished cut surface of the polished cell may be performed separately, it is preferable in terms of simplifying the process that the healing of the cut surface of the polished cell is performed by the same method at the same time as the etching of the polished cell.

When the above etching and healing steps are performed simultaneously, they are performed to make the cells in the thick film state ultra-thin while processing the cut surface as a smoothly rounded shape. The healing step is to improve the edge strength of the cut cells, and the healed cut surface may be processed to have a smoother rounded shape than the shape of the polished cut surface. Defects such as chipping of the cut surface caused by physical polishing are removed by healing and the roughness is lowered, which may inhibit breakage due to bending. Preferably, the rounded surface has a gentle curve.

In the chemical etching step, a dipping method of dipping the cell in an etchant may be used. In one implementation, it may be performed by including at least one of: a cell jig clamping step of clamping the cell in a jig for handling the cell; a jig dipping step of dipping the jig into an etchant bath filled with etchant to allow the cell to be dipped into the etchant; a chemical etching step of chemically etching the thickness and cut surface of the cell in the dipped state uniformly at a certain etching rate; a jig ejecting step of ejecting the jig from the etchant bath upon completion of chemical etching; and a cell separating step of separating the chemically etched cell from the jig.

Etching may also be aided by additionally implementing a side spray or top spray method to the dipping method in which the cells are all submerged in the etchant. It is also possible to perform the side spray method or the top spray method alone, without the dipping method in which the cell is completely submerged in the etchant. In this case, since the glass is cut cell by cell, the surface tension of the sprayed etchant enables the etchant to be adsorbed on the surface of the glass cell, thus enabling etching and side surface healing.

In the above etching and healing steps, a plurality of glass cells can be moved through the upper and lower jigs respectively, and the etching and healing can be performed while minimizing the contact between each glass cell.

In one or more embodiments, the etchant may comprise at least one selected from the group consisting of hydrofluoric acid (HF), ammonium hydrofluoride ($NH_4F$), ammonium hydrogen fluoride ($NH_4HF_2$), sodium fluoride (NaF), sodium hydrogen fluoride ($NaHF_2$), lithium fluoride (LiF), potassium fluoride (KF), and calcium fluoride ($CaF_2$).

If the etching of the polished cell and the healing of the polished cut surface of the polished cell are performed in separate steps, the chemical etching step may be performed to etch the cell as described above, and then the healing step of the polished cut surface of the polished cell may be further performed by applying the same method as the chemical etching step as described above.

Steps of cleaning, chemical strengthening, and/or chemical polishing

The method of manufacturing the ultra-thin glass may further comprise steps of cleaning, chemical strengthening, and/or chemical polishing. The order of the cleaning step, the chemical strengthening step, and the chemical polishing step may be changed, added, or omitted as needed.

The cleaning step may be for removing residual debris and etchant from the previous process. The cleaning process for removing the residual debris and etchant may be any conventionally used process. In one implementation, the cleaning step may be performed using a cleaning solution. The cleaning step may use a spray method of spraying the cleaning solution or a dipping method of immersing in the cleaning solution may be used.

The cleaning solution is not particularly limited as long as it serves to clean the ultra-thin glass surface. In one or more embodiments, it may be pure water (DI Water), or an alkaline cleaning solution comprising potassium hydroxide (KOH) or sodium hydroxide (NaOH).

The chemical strengthening step is intended to strengthen the ultra-thin glass by immersing the ultra-thin glass in a molten salt to exchange alkali ions in the ultra-thin glass with alkali ions in the molten salt. In one embodiment, the chemical strengthening step may be performed by including: preheating step of slowly raising the temperature of the ultra-thin glass; chemically strengthening the preheated ultra-thin glass by ionic substitution; and annealing the strengthened ultra-thin glass at room temperature.

The preheating step of slowly raising the temperature of the ultra-thin glass is to prevent damage due to a sudden change in temperature in the ultra-thin glass during the chemical strengthening step that is carried out at a high temperature of 350 to 500°C. This may be performed to gradually increase the temperature before immersing the ultra-thin glass in the ion substitution solution.

The chemical strengthening step may be performed by contacting the glass containing $Na^+$ ions with a salt containing $K^+$ ions, which causes the exchange of $Na^+$ and $K^+$ ions on the surface to proceed in an inward direction, which allows $K^+$ ions to enter the positions occupied by $Na^+$ ions in the ultra-thin glass structure, and since the ionic radius of $K^+$ is larger than that of $Na^+$, a compressive force is generated around the reticulated structure, which strengthens the glass.

The depth at which the $K^+$ ions are substituted by the chemical strengthening is not particularly limited, but may be 5% to 40% of the cell thickness in terms of improved bending resistance, preferably 10% to 35%, and more preferably 15% to 30%.

Furthermore, the targeted depth of chemical strengthening may vary depending on the glass thickness, and for example, the depth (thickness) of chemical strengthening may vary depending on the glass thickness, as shown in Table 1 below.

Table 1

| Cell thickness | Chemical strengthening depth (thickness) | | | | | |
|---|---|---|---|---|---|---|
| | 5% | 10% | 15% | 20% | 30% | 40% |
| 30 $\mu$m | 1.5 $\mu$m | 3 $\mu$m | 4.5 $\mu$m | 6 $\mu$m | 9 $\mu$m | 12 $\mu$m |
| 50 $\mu$m | 2.5 $\mu$m | 5 $\mu$m | 7.5 $\mu$m | 10 $\mu$m | 15 $\mu$m | 20 $\mu$m |
| 70 $\mu$m | 3.5 $\mu$m | 7 $\mu$m | 10.5 $\mu$m | 14 $\mu$m | 21 $\mu$m | 28 $\mu$m |

The ionic substitution solution utilized for the chemical strengthening may be any conventionally used ionic substitution solution, and in one embodiment may comprise potassium nitrate ($KNO_3$).

After the above chemical strengthening process, an annealing step and a process for removing impurities may be further performed. The process for annealing and removing impurities may be any conventionally used process, and may include, in one embodiment, a natural annealing process in contact with the outside air followed by a cleaning process to remove impurities, such as potassium nitrate.

In the chemical polishing step, the ultra-thin glass is polished using a chemical polishing solution. The chemical polishing thickness is such that, in terms of improving bending resistance, the thickness of the ultra-thin glass after chemical polishing is at least 80% but less than 100% of the thickness of the ultra-thin glass before chemical polishing, preferably at least 90% but less than 100%.

The chemical polishing solution may comprise at least one of hydrofluoric acid (HF) and ammonium fluoride ($NH_4F$), although it is not particularly limited as long as it is typically used in the process of polishing ultra-thin glass.

Furthermore, after the above chemical polishing step, additional cleaning step may be performed as needed.

The primer layer 120 is formed to cover the upper surface and side surfaces of the glass substrate 110. Alternatively, the primer layer 120 is formed to cover the entire surface of the glass substrate 110.

The primer layer 120 further improves the adhesion between the glass substrate 110 and the base resin layer 130.

In one embodiment of the present invention, the primer layer 120 may be formed from a composition for forming a primer layer including at least one of a polyurethane resin and a polyester resin, and may preferably be formed from a composition for forming a primer layer including a polyurethane resin.

In particular, the primer layer may be formed from a composition for forming a primer layer comprising a waterborne polyurethane resin and a stabilizer in terms of preventing yellowing even under high temperature or ultraviolet conditions and improving hardness and bending resistance, and the stabilizer may include a primary heat stabilizer and a secondary heat stabilizer.

The waterborne polyurethane resin has the advantage of superior optical properties and adhesion compared to a solvent-type general polyurethane resin.

The waterborne polyurethane resin includes an ionic resin and a nonionic resin. In the case of a nonionic resin, particle stability is good, but mechanical properties such as film forming ability and adhesive strength are inferior to those of a waterborne polyurethane resin having an ionic functional group. Accordingly, it is preferable to use a waterborne polyurethane resin having an ionic functional group in order to maintain mechanical performance.

The waterborne polyurethane resin may be manufactured through a prepolymer manufacturing process using polyester polyol, diisocyanate, and chain extender as raw materials. Specifically, the waterborne polyurethane resin is synthesized by mixing polyester polyol and diisocyanate, performing a reaction at high temperature to manufacture a prepolymer, then dispersing the prepolymer in water while stirring at high speed, then adding a chain extender and adjusting the molecular weight through a polymerization reaction of the dispersed prepolymer.

In addition, in the case of manufacturing a water-dispersible polyurethane resin having an ionic functional group, a dispersing agent (ionizing agent) is further added to a polyester polyol and a diisocyanate, a reaction is performed at a high temperature to manufacture a hydrophilic prepolymer, a neutralizing agent is added to neutralize the hydrophilic prepolymer, the neutralized hydrophilic prepolymer is added to water stirred at a high speed to disperse it, a chain extender is added, and the molecular weight is adjusted through a polymerization reaction of the dispersed hydrophilic prepolymer, thereby synthesizing a water-dispersible polyurethane resin.

The waterborne polyurethane resin has the advantage of not being decomposed and maintaining adhesion even at high temperature and high humidity by specifically using polycaprolactone polyol, which is a type of polyester polyol, to compensate for the disadvantage of being hydrolyzed by water. In addition, by using isophorone diisocyanate, which is an aliphatic diisocyanate, it can exhibit transparent characteristics compared to aromatic diisocyanate.

The waterborne polyurethane resin does not contain fluorine atoms, so it can maintain appropriate surface energy and provide adhesion to the film, and it does not contain sulfo groups, so it can suppress haze generation, thereby exhibiting better optical characteristics.

The waterborne polyurethane resin may have a number-average molecular weight of 10,000 to 4 million, preferably 20,000 to 2 million. When the number-average molecular weight is within the above range, stability can be secured in the water-dispersed state, coating properties are excellent, and mechanical properties are also good.

The waterborne polyurethane resin may be included in an amount of 1 to 40 wt% based on 100 wt% of the total composition for forming a primer layer, but is not limited thereto. When the waterborne polyurethane resin is included in the above content range, excellent adhesion between the glass substrate and the base resin layer can be ensured, and coating properties can also be secured.

The stabilizer includes a primary heat stabilizer and a secondary heat stabilizer.

By including a combination of the primary heat stabilizer and the secondary heat stabilizer as the stabilizer, it has the effect of preventing yellowing even under high temperature or ultraviolet conditions by removing radicals generated by heat or ultraviolet rays (radical scavenging) and suppressing further decomposition reactions.

Specifically, by including a combination of the primary heat stabilizer and the secondary heat stabilizer as the stabilizer, yellowing does not occur even after high temperature heat treatment at 100 to 250°C for 20 to 60 minutes, so that transparency can be maintained.

Thus, the primer layer 120 can maintain its transparency by not yellowing even after high temperature heat treatment performed when forming the base resin layer 130 described below.

For example, after a laminate having the primer layer 120 formed on the glass substrate 110 is heat-treated at a temperature of 100 to 250°C for 20 to 60 minutes, the yellow index YI of the laminate according to ASTM E313-73 may be less than 1.0.

The primary heat stabilizer releases its own hydrogen when a polymer material reacts with oxygen due to heat or ultraviolet rays to cause a decomposition reaction, thereby stabilizing radicals by preventing a chain reaction of radicals. Accordingly, it may prevent yellowing through the action of radical scavenging.

The primary heat stabilizer may be at least one selected from a phenol-based heat stabilizer and an amine-based heat stabilizer.

For example, the phenol-based heat stabilizers may include 3,9-bis[2-3-(3-t-butyl-4-hydroxy-5-methylphenyl) propionyloxy]-1,1-dimethylethoxy]-2,4,8,10-tetraoxaspiro[5.5]undecane, pentaerythrityl-tetrakis[3-(3,5-di-t-butyl-4-hydroxyphenyl)propionate], 1,3,5,-trimethyl-2,4,6,-tris(3'5'-di-t-butyl-4-hydroxybenzyl)benzene, triethyleneglycol-bis [3-(3-t-butyl-5-methyl-4-hydroxyphenyl)propionate], 4,4'-thiobis(6-t-butyl-3-methylphenol), tris-(3,5-di-t-butyl-4-hydroxybenzyl)-isocyanurate, 1,3,5-tris(4-t-butyl-3-hydroxy-2,6-dimethylbenzyl)-isocyanurate, 1,6-hexanediol-bis[3-(3,5-di-t-butyl-4-hydroxyphenyl)propionate], 2,2-thio-diethylenebis[3-(3,5-di-t-butyl-4-hydroxyphenyl)propionate], N,N'-hexamethylenebis(3,5-di-t-butyl-4-hydroxy-hydrocinnamamide), 1,3,5-trimethyl-2,4,6-tris(3,5-di-t-butyl-4-hydroxybenzyl)benzene, 2,4-bis[(octylthio)methyl]-O-cresol, 1,6-**hexanediol-bis-[3-(3,5-di-t-butyl-4-hydroxyphenyl)propionate],** octadecyl 3-(3,5-di-tert-butyl-4-hydroxyphenol)propionate, 2,2'-methylenebis(4-methyl-6-t-butylphenol), 4,4'-butylidene-bis(3-methyl-6-t-butylphenol), 1,1,3-tris(2-methyl-4-hydroxy-5-t-butylphenyl)butane, 1,3,5-tris(4-hydroxybenzyl)benzene, and tetrakis[methylene-3-(3,5'-di-t-butyl-4'-hydroxyphenylpropionate)]methane.

Commercially available products of the phenol-based heat stabilizer include Irganox 1010 (manufactured by BASF), Sumilizer BBM-S (manufactured by Sumitomo Chemical), ADK STAB AO-80 (manufactured by ADEKA), Sumilizer GP (manufactured by Sumitomo Chemical), and Irganox 1035 (manufactured by BASF).

For example, the amine-based heat stabilizers may include naphthylamine-based heat stabilizers such as 1-naphthylamine, phenyl-1-naphthylamine, p-octylphenyl-1-naphthylamine, p-nonylphenyl-1-naphthylamine, p-dodecylphenyl-1-naphthylamine, and phenyl-2-naphthylamine; phenylenediamine-based heat stabilizers such as N,N'-diisopropyl-p-phenylenediamine, N,N'-diisobutyl-p-phenylenediamine, N,N'-diphenyl-p-phenylenediamine, N,N'-di-β-naphthyl-p-phenylenediamine, N-phenyl-N'-isopropyl-p-phenylenediamine, N-cyclohexyl-N'-phenyl-p-phenylenediamine, N-1,3-dimethylbutyl-N'-phenyl-p-phenylenediamine, dioctyl-p-phenylenediamine, phenylhexyl-p-phenylenediamine, and phenyloctyl-p-phenylenediamine; diphenylamine-based heat stabilizers such as dipyridylamine, diphenylamine, p,p'-di-n-butyldiphenylamine, p,p'-di-t-butyldiphenylamine, p,p'-di-t-pentyldiphenylamine, p,p'-dioctyldiphenylamine, p,p'-dinonyldiphenylamine, p,p'-didecyldiphenylamine, p,p'-didodecyldiphenylamine, p,p'-distyryldiphenylamine, p,p'-dimethoxydiphenylamine, 4,4'-bis(4-$\alpha$,$\alpha$-dimethylbenzoyl)diphenylamine, p-isopropoxydiphenylamine, and dipyridylamine; phenothiazine-based heat stabilizers such as phenothiazine, N-methylphenothiazine, N-ethylphenothiazine, 3,7-dioctylphenothiazine, phenothiazine carboxylic acid ester, and phenoselenazine.

The secondary heat stabilizer can inhibit the generation of peroxide radicals by reducing peroxides generated by radicals during the above decomposition reaction, thereby synergistically working with the primary heat stabilizer to provide high temperature heat resistance and prevent yellowing by preventing coloration.

The secondary heat stabilizer may be one or more selected from a phosphorus-based heat stabilizer and a sulfur-based heat stabilizer.

For example, the phosphorus-based heat stabilizers may include 3,9-bis(2,6-di-tert-butyl-4-methylphenoxy)-2,4,8,10-tetraoxa-3,9-diphosphaspiro[5.5]undecane, diisodecylpentaerythritol diphosphite, bis(2,4-di-t-butylphenyl)pentaerythritol diphosphite, 2,2'-methylenebis(4,6-di-t-butyl-1-phenyloxy)(2-ethylhexyloxy)phosphorus, 6-[3-(3-t-butyl-4-hydroxy-5-methylphenyl)propoxy]-2,4,8,10-tetra-t-butyldibenz[d,f][1,3,2]dioxaphosphepin, triphenylphosphite, diphenylisodecylphosphite, phenyldiisodecyl phosphite, 4,4'-butylidene-bis(3-methyl-6-t-butylphenylditridecyl)phosphite, octadecyl phosphite, tris(nonylphenyl)phosphite, 9,10-dihydro-9-oxa-10-phosphaphenanthrene-10-oxide, 10-(3,5-di-t-butyl-4-hydroxybenzyl)-9,10-dihydro-9-oxa-10-phosphaphenanthrene-10-oxide, 10-decyloxy-9,10-dihydro-9-oxa-10-phosphaphenanthrene-10-oxide, tris(2,4-di-t-butylphenyl)phosphite, cyclicneopentanetetraylbis(2,4-di-t-butylphenyl) phosphite, cyclicneopentanetetraylbis(2,6-di-t-butylphenyl)phosphite, 2,2-methylenebis(4,6-di-t-butylphenyl)octylphosphite, tris(2,4-di-t-butylphenyl)phosphite, tetrakis(2,4-di-t-butylphenyl)[1,1-biphenyl]-4,4'diylbisphosphonite, and bis [2,4-bis(1,1-dimethylethyl)-6-methylphenyl]ethyl ester phosphonic acid.

Commercially available products of the phosphorus-based heat stabilizer include ADK STAB 1178, ADK STAB TPP, ADK STAB 1500, ADK STAB 135A, ADK STAB 517 from Adeka Corporation, Sumilizer GP from Sumitomo Chemical, and Irganox 1035 from BASF.

For example, the sulfur-based heat stabilizers may include 2,2-bis({[3-(dodecylthio)propionyl]oxy}methyl)-1,3-propanediyl-bis[3-(dodecylthio)propionate], 2-mercaptobenzimidazole, dilauryl-3,3'-thiodipropionate, dimyristyl-3,3'-thiodipropionate, distearyl-3,3'-thiodipropionate, pentaerythrityl-tetrakis(3-laurylthiopropionate), 2-mercaptobenzimidazole, and the like.

The stabilizer may be included in an amount of 0.1 to 10 wt% based on 100 wt% of the total composition for forming a primer layer, but is not limited thereto. The inclusion of the stabilizer in the above content range has the advantages of preventing the surface of the cured coating film from being decomposed by heat or ultraviolet radiation without degrading the optical performance, and not affecting the curability during thermal curing.

The composition for forming a primer layer may further comprise a leveling agent.

The leveling agent is added to impart smoothness and coatability of the film upon coating with the composition, which may include one or more of silicone-based leveling agents, fluorine-based leveling agents, and acrylic-based leveling agents .

Specifically, BYK-306, BYK-307, BYK-323, BYK-331, BYK-333, BYK-337, BYK-373, BYK-375, BYK-377, BYK-378, BYK-3530, BYK-3560, BYK-358N, and BYK-361N from BYK Chemistry, TEGO Glide 410, TEGO Glide 411, TEGO Glide 415, TEGO Glide 420, TEGO Glide 432, TEGO Glide 435, TEGO Glide 440, TEGO Glide 450, TEGO Glide 455, TEGO Rad 2100, TEGO Rad 2200N, TEGO Rad 2250, TEGO Rad 2300, and TEGO Rad 2500 from Degussa, FC-4430, and FC-4432 from 3M, and the like may be used as the leveling agent, but it is not limited thereto.

The leveling agent may be included in an amount of 0.01 to 1 wt% based on 100 wt% of the total composition for forming a primer layer, but it is not limited thereto. However, when the leveling agent is included in the above content range, it is advantageous to maximize the smoothness and coatability of the coating film while maintaining good hardness and flexibility.

The composition for forming a primer layer according to the present invention may further comprise a solvent.

The solvent may be used without limitation as long as it is capable of dissolving or dispersing the above-mentioned components.

As the solvent, for example, alcohols (methanol, ethanol, isopropanol, butanol, methylcellosolve, ethylcellosolve, etc.), ketones (methylethyl ketone, methylbutyl ketone, methylisobutyl ketone, diethyl ketone, dipropyl ketone, cyclohexanone, etc.), acetates (ethyl acetate, propyl acetate, normal butyl acetate, tert-butyl acetate, methyl cellosolve acetate, ethyl cellosolve acetate, propylene glycol monomethyl ether acetate, propylene glycol monoethyl ether acetate, propylene glycol monopropyl ether acetate, methoxybutyl acetate, methoxypentyl acetate, etc.), hexanes (hexane, heptane, octane, etc.), benzenes (benzene, toluene, xylene, etc.), ethers (diethylene glycol dimethyl ether, diethylene glycol diethyl ether, diethylene glycol dipropyl ether, diethylene glycol dibutyl ether, propylene glycol monomethyl ether, etc.) may be preferably used. Each of the above-exemplified solvents can be used alone or in combination of two or more.

The solvent may be included in a residual amount so as to make up 100 wt% of the composition for forming a primer layer. For example, the solvent may be used in an amount of 50 to 98 wt% based on 100 wt% of the composition for forming a primer layer. If the amount of the solvent is less than this amount, the coating layer thickness cannot be reduced due to the high viscosity, which not only reduces the workability, but also results in poor flexibility. Conversely, if the solvent content exceeds the above range, the desired coating thickness cannot be formed, and the coating solution may run off during the drying process, contaminating the opposite side of the glass or film and causing stains.

The primer layer 120 may be formed by applying and curing the composition for forming a primer layer described above onto the glass substrate 110.

The application may be by any known method, such as slit coating, knife coating, spin coating, casting, micro-gravure coating, gravure coating, bar coating, roll coating, wire bar coating, dip coating, spray coating, screen printing, gravure printing, flexographic printing, offset printing, inkjet coating, dispenser printing, nozzle coating, capillary coating, and the like.

For example, the application of the composition for forming a primer layer to the side surfaces of the glass substrate 110 may be performed by erecting the glass substrate 110 and dipping all four sides of the glass substrate 110 into the composition for forming a primer layer by 3 mm or less, such as about 1 mm. The application of the composition for forming a primer layer to the top and/or bottom surface of the glass substrate 110 may be performed by slit coating the composition for forming a primer layer on the top and/or bottom surface of the glass substrate 110.

The curing may be carried out by means of a pre-bake and/or post-bake thermal curing process. The thermal curing process can be carried out by any known method, preferably in an oven at 80 to 150°C for 1 to 5 minutes.

The primer layer may be formed by further proceeding with a photo-curing process by adding a photo-curing oligomer and/or monomer and a photoinitiator. In the case of photo-curing, the primer layer is preferably formed by irradiating the primer layer with a UV accumulated light dose of 300 to 1000 mJ/cm$^2$ after drying.

The thickness of the primer layer may be at least 0.1 $\mu$m and less than 10 $\mu$m, preferably 0.1 to 2 $\mu$m. If the thickness of the primer layer is in the above range, it is advantageous in terms of adhesion to the glass substrate. If the thickness of the primer layer is less than 0.1 $\mu$m, it may be difficult to express adhesion by penetrating the primer layer when coating the base resin layer on top of the primer layer, and if the thickness of the primer layer is 10 $\mu$m or more, the optical performance may be degraded. When the primer layer is formed to cover the entire surface of the glass substrate, the thickness of the primer layer is the sum of the thicknesses of the primer layers present on top and bottom surfaces of the glass substrate.

The base resin layer 130 is formed to cover the top surface and side surfaces of the primer layer 120. Alternatively, the base resin layer 130 is formed to cover the entire surface of the primer layer 120.

The base resin layer 130 supports the functional coating layer 140 described later and serves as a protective layer to prevent shattering of the glass substrate 110. Furthermore, the base resin layer 130 plays a role in controlling the bending resistance, pencil hardness, and curl properties of the optical laminate.

In one embodiment of the present invention, the base resin layer may be formed from a composition for forming a base resin layer comprising at least one resin of a polyimide resin and a polyamideimide resin in that the base resin layer has excellent durability against repeated bending, making it easier to apply to flexible displays while securing pencil hardness and curl properties. In particular, the base resin layer may be formed from a composition for forming a base resin layer comprising a polyamideimide resin in terms of bending resistance, pencil hardness, and curl properties.

In particular, the base resin layer has a controlled elastic modulus of 3.3 to 5.2 GPa.

By controlling the elastic modulus of the base resin layer to be 3.3 to 5.2 GPa, preferably 3.8 to 5.2 GPa, and even more preferably 4.6 to 5.2 GPa, the bending resistance, the pencil hardness, and curl properties of the optical laminate can be simultaneously secured.

If the elastic modulus of the base resin layer exceeds 5.2 GPa, the shrinkage stress proportional to the product of the elastic modulus and the curl (strain) due to the shrinkage caused by the drying of the base resin layer becomes large, and the shrinkage stress may affect the entire module even after the display module is bonded, resulting in a large curl tendency toward the functional coating layer. If it is less than 3.3 GPa, the elastic modulus of the base resin layer itself is insufficient, which reduces the resistance to deformation and restorability due to external force, and thus the pencil hardness of the base resin layer itself may decrease, which may ultimately reduce the pencil hardness of the entire optical laminate.

The elastic modulus is a value representing the stiffness of the material, also known as the modulus of elasticity. The elastic modulus is defined as the ratio of the stress and strain in the elastic region, which can be determined from the slope of the linear elastic region in the stress-strain curve obtained from a tensile test on a specimen of the material.

Specifically, the elastic modulus of the base resin layer can be measured in tensile evaluation mode using a universal testing machine (UTM). The base resin layer can be deposited on a glass without a primer layer formed and peeled off after drying to obtain only the base resin layer. The resulting resin layer can be used to make a tensile test specimen using a super cutter in the JIS-K7139 bar-type specification, and measured in the tensile evaluation mode of the universal testing machine at a tensile speed of 4 mm/min.

The elastic modulus of the base resin layer can be adjusted by controlling the type and molar ratio of the repeating units constituting the resin, the weight average molecular weight of the resin, and the like.

The polyimide resin refers to a resin containing repeating units comprising imide groups.

The polyimide resin may be prepared by imidizing a polyamide acid obtained by the condensation polymerization of a tetracarboxylic acid compound with a diamine compound. The imidation may be carried out chemically and/or thermally.

The tetracarboxylic acid compounds represent tetracarboxylic acids or tetracarboxylic acid derivatives. The tetracarboxylic acid derivatives are anhydrides, preferably dianhydrides, acid chlorides, etc. of tetracarboxylic acid, for example. Tetracarboxylic acid compounds include, for example, aromatic tetracarboxylic acid compounds, such as aromatic tetracarboxylic acid and its anhydride, preferably its dianhydride; aliphatic tetracarboxylic acid compounds, such as aliphatic tetracarboxylic acid and its anhydride, preferably its dianhydride; and the like. These tetracarboxylic acid compounds can be used alone or in combination of two or more.

Specific examples of the aromatic tetracarboxylic acid dianhydride include 4,4'-oxydiphthalic acid dianhydride, 3,3',4,4'-benzophenonetetracarboxylic acid dianhydride, 2,2',3,3'-benzophenonetetracarboxylic acid dianhydride, 3,3',4,4'-biphenyltetracarboxylic acid dianhydride, 2,2',3,3'-biphenyltetracarboxylic acid dianhydride, 3,3',4,4'-diphenylsulfonetetracarboxylic acid dianhydride, 2,2-bis(3,4-dicarboxyphenyl)propane dianhydride, 2,2-bis(2,3-dicarboxyphenyl)propane dianhydride, 2,2-bis(3,4-dicarboxyphenoxyphenyl)propane dianhydride, 4,4'-(hexafluoroisopropylidene) diphthalic acid dianhydride, 1,2-bis(2,3-dicarboxyphenyl)ethane dianhydride, 1,1-bis(2,3-dicarboxyphenyl)ethane dianhydride, 1,2-bis(3,4-dicarboxyphenyl)ethane dianhydride, 1,1-bis(3,4-dicarboxyphenyl)ethane dianhydride, bis(3,4-dicarboxyphenyl)methane dianhydride, bis(2,3-dicarboxyphenyl)methane dianhydride, 4,4'-(p-phenylenedioxy)diphthalic acid dianhydride, 4,4'-(m-phenylenedioxy)diphthalic acid dianhydride, 1,2,4,5-benzenetetracarboxylic acid dianhydride, 2,3,6,7-naphthalenetetracarboxylic acid dianhydride, and the like.

Examples of the aliphatic tetracarboxylic acid dianhydride may include 1,2,4,5-cyclohexanetetracarboxylic acid dianhydride, 1,2,3,4-cyclobutanetetracarboxylic acid dianhydride, 1,2,3,4-cyclopentanetetracarboxylic acid dianhydride, bicyclo[2.2.2]oct-7-ene-2,3,5,6-tetracarboxylic acid dianhydride, dicyclohexyl-3,3',4,4'-tetracarboxylic acid dianhydride, 1,2,3,4-butanetetracarboxylic acid dianhydride, 1,2,3,4-pentanetetracarboxylic acid dianhydride, and the like.

Aliphatic diamines and/or aromatic diamines can be used as the diamine compound.

Examples of the aliphatic diamine may include hexamethylenediamine, 1,3-bis(aminomethyl)cyclohexane, 1,4-bis(aminomethyl)cyclohexane, norbornanediamine, 4,4'-diaminodicyclohexylmethane, and the like.

Examples of the aromatic diamine may include p-phenylenediamine, m-phenylenediamine, 2,4-toluenediamine, m-xylylenediamine, p-xylylenediamine, 1,5-diaminonaphthalene, 2,6-diaminonaphthalene, 4,4'-diaminodiphenylmethane, 4,4'-diaminodiphenylpropane, 4,4'-diaminodiphenyl ether, 3,4'-diaminodiphenyl ether, 3,3'-diaminodiphenyl ether, 4,4'-diaminodiphenylsulfone, 3,4'-diaminodiphenylsulfone, 3,3'-diaminodiphenylsulfone, 1,4-bis(4-aminophenoxy)benzene, 1,3-bis(4-aminophenoxy)benzene, bis(4-(4-aminophenoxy)phenyl)sulfone, bis(4-(3-aminophenoxy) phenyl)sulfone, 2,2-bis(4-(4-aminophenoxy)phenyl)propane, 2,2-bis(4-(3-aminophenoxy)phenyl)propane, 2,2'-dimethylbenzidine, 2,2'-bis(trifluoromethyl)benzidine, 4,4'-bis(4-aminophenoxy)biphenyl, 9,9-bis(4-aminophenyl)fluorene, 9,9-bis(4-amino-3-methylphenyl)fluorene, 9,9-bis(4-amino-3-chlorophenyl)fluorene, 9,9-bis(4-amino-3-fluorophenyl)fluorene, and the like.

The molar ratio of the tetracarboxylic acid compound and diamine compound may be adjusted to control the elastic modulus of the base resin layer to the above range.

The weight average molecular weight (Mw) of the polyimide resin may be 100,000 to 1 million in standard polystyrene equivalents. When the weight average molecular weight (Mw) of the polyimide resin is in the above range, coating properties can be secured when forming a coating film, and the optical laminate may have desirable bending resistance, pencil hardness, and curl properties.

The polyamideimide resin refers to a resin containing a repeating unit comprising an imide group and a repeating unit comprising an amide group.

The polyamideimide resin can be prepared by imidizing a polyamide acid obtained by the condensation polymerization of a tetracarboxylic acid compound, a dicarboxylic acid compound, and a diamine compound. The imidation may be carried out chemically and/or thermally.

The tetracarboxylic acid compounds and diamine compounds may be the same as those used in the preparation of the polyimide resin.

The dicarboxylic acid compounds refer to dicarboxylic acids or dicarboxylic acid derivatives, and the dicarboxylic acid derivatives are, for example, acid chlorides or esters of those dicarboxylic acids. The dicarboxylic acid compounds may be used alone or in combination of two or more.

Exemplary dicarboxylic acid compounds include, for example, 2,5-thiophenedicarboxylic acid, 1,3-cyclobutanedicarboxylic acid, 1,3-cyclopentanedicarboxylic acid, 1,4-cyclohexanedicarboxylic acid, 4,4'-oxybisbenzoic acid, terephthalic acid, isophthalic acid, 2,6-naphthalenedicarboxylic acid, 1,5-naphthalenedicarboxylic acid, 1,4-naphthalenedicarboxylic acid, 4,4'-biphenyldicarboxylic acid, 3,3'-biphenyldicarboxylic acid, terephthaloyl chloride (TPC), 4,4'-biphenyldicarbonyl chloride (BPDC), 4,4'-oxybis(benzoyl chloride) (OBBC), and the like.

The molar ratio of the tetracarboxylic acid compound, dicarboxylic acid compound, and diamine compound may be adjusted to control the elastic modulus of the base resin layer to the above range.

The weight average molecular weight (Mw) of the polyamideimide resin may be 100,000 to 1 million in standard polystyrene equivalents. When the weight average molecular weight (Mw) of the polyamideimide resin is in the above range, coating properties can be secured when forming a coating film, and the optical laminate may have desirable bending resistance, pencil hardness, and curl properties.

The composition for forming a base resin layer may further comprise additives such as ultraviolet absorbers, inorganic particles, surfactants, adhesion enhancers, etc. as needed.

The composition for forming a base resin layer of the present invention may further comprise a solvent.

The solvent may be used without limitation as long as it is capable of dissolving or dispersing the above-mentioned components.

Exemplary solvents may include alcohol-based solvents (methanol, ethanol, isopropanol, butanol, methylcellosolve, ethylcellosolve, etc.), organic solvents containing nitrogen atoms (N-methyl-2-pyrrolidone, N,N-dimethylformamide, N,N-dimethylacetamide, hexamethylphosphoramide, 1,3-dimethyl-2-imidazolidinone, etc.), dimethylsulfoxide, $\gamma$-butyrolactone, etc. Each of the above-exemplified solvents can be used alone or in combination of two or more.

The solvent may be included in a residual amount so as to make up 100 wt% of the composition for forming a base resin layer. For example, the solvent may be used in an amount that allows the viscosity of the composition to be adjusted to a desired range to secure coating properties.

The base resin layer 130 may be formed by applying the above-described composition for forming a base resin layer on the primer layer 120 and curing it.

The application may be by any known method, such as slit coating, knife coating, spin coating, casting, micro-gravure coating, gravure coating, bar coating, roll coating, wire bar coating, dip coating, spray coating, screen printing, gravure printing, flexographic printing, offset printing, inkjet coating, dispenser printing, nozzle coating, capillary coating, and the like.

The application of the composition for forming a base resin layer on the side and the top surfaces of the primer layer 120 can be performed by applying the composition for forming a base resin layer to cover the top surface of the primer layer 120. Since the primer layer 120 has excellent adhesion, application to the side and the top surfaces can be performed simultaneously if the application area is widely adjusted to cover the top surface of the primer layer 120. For application to all surfaces of the primer layer 120 including the side surfaces, the top surface, and the bottom surface, the application is performed as described above for the side and the top surfaces, and then the application is performed for the bottom surface.

The curing may be carried out by means of a pre-bake and/or post-bake thermal curing process. The thermal curing process can be carried out by any known method, preferably using an oven.

The pre-bake is preferably performed at a temperature of 140°C or less, and the post-bake is preferably performed at a temperature of 200°C or more if the base resin is a polyimide resin, and at a temperature of 150°C or more if the base resin is a polyamideimide resin.

The thickness of the base resin layer may be 3 to 50 $\mu$m, preferably 5 to 30 $\mu$m, more preferably 5 to 10 $\mu$m in terms of pencil hardness of the optical laminate. If the thickness of the base resin layer is thinner than the above range, there is a high possibility of glass breakage during handling due to a lack of protection for the glass, and if the thickness is thicker than the above range, curl caused by drying of the base resin layer may be a problem. When the base resin layer is formed to cover the entire surface of the primer layer, the thickness of the base resin layer is the sum of the thicknesses of the base resin layers on the top and bottom surfaces of the glass substrate.

A functional coating layer 140 is formed on the base resin layer 130.

The functional coating layer 140 plays a role in improving the surface hardness. In addition, the functional coating layer 140 exhibits antifouling performance, exhibits excellent abrasion resistance, and has excellent elastic recovery rate, which can provide excellent pen depression suppression properties, as well as excellent effects on durability such as scratch resistance, chemical resistance, and bending resistance. Furthermore, the functional coating layer 140 controls the bending resistance and curl properties of the optical laminate.

The functional coating layer 140 may be a hard coating layer.

In one embodiment of the present invention, the hard coating layer may be formed from a hard coating composition containing a light-transmitting resin, a fluorine-based UV-curable functional group-containing compound, a photoinitiator, and a solvent.

The light-transmitting resin is a photocurable resin, and the photocurable resin may include, but is not limited to, a photocurable (meth)acrylate oligomer and/or monomer.

As the photocurable (meth)acrylate oligomers, epoxy (meth)acrylate, urethane (meth)acrylate, polyhedral oligomeric silsesquioxane (meth)acrylate, dendritic (meth)acrylate, and the like can be used, and one or more of urethane (meth)acrylate and dendritic (meth)acrylate are preferred.

The urethane (meth)acrylate can be prepared by reacting a (meth)acrylate having an intramolecular hydroxy group with a compound having an isocyanate group in the presence of a catalyst. Specific examples of (meth)acrylates having an intramolecular hydroxy group include 2-hydroxyethyl (meth)acrylate, 2-hydroxyisopropyl (meth)acrylate, 4-hydroxybutyl (meth)acrylate, caprolactone modified hydroxy acrylate, pentaerythritol tri(meth)acrylate, dipentaerythritol penta(meth)acrylate, and the like. Further, specific examples of compounds having an isocyanate group include 1,4-diisocyanatobutane, 1,6-diisocyanatohexane, 1,8-diisocyanatooctane, 1,12-diisocyanatododecane, 1,5-diisocyanato-2-methylpentane, trimethyl-1,6-diisocyanatohexane, 1,3-bis(isocyanatomethyl)cyclohexane, trans-1,4-cyclohexenediisocyanate, 4,4'-methylene bis(cyclohexylisocyanate), isophorone diisocyanate, toluene-2,4-diisocyanate, toluene-2,6-diisocyanate, xylene-1,4-diisocyanate, tetramethylxylene-1,3-diisocyanate, 1-chloromethyl-2,4-diisocyanate, 4,4'-methylene bis(2,6-dimethylphenylisocyanate), 4,4'-oxybis(phenylisocyanate), trifunctional isocyanate derived from hexamethylene diisocyanate, trimethylolpropane-adduct toluene diisocyanate, and the like.

The dendritic (meth)acrylate refers to a (meth)acrylate oligomer having a dendritic structure, in which "dendritic structure" means a shape in which monomers branch radially from a single nucleus, polymerize, and spread radially, and the dendritic (meth)acrylate can be used without limitation as long as it corresponds to the above-mentioned shape.

Commercially available dendritic (meth)acrylates include Miramer SP1106 from Miwon Co., Ltd., Viscoat 1000, Viscoat 1020, and Viscoat 1080 from Osaka Yugi Co., Ltd.

The monomers can be used in a conventional manner without limitation. In particular, the monomer having an unsaturated group such as a (meth)acryloyl group, a vinyl group, a styryl group, an allyl group, etc. in the molecule as a photocurable functional group is preferred. Among them, monomers having a (meth)acryloyl group are preferred.

Specific examples of monomers having a (meth)acryloyl group may be one or more selected from the group consisting of neopentyl glycol acrylate, 1,6-hexanediol di(meth)acrylate, propylene glycol di(meth)acrylate, triethylene glycol di(meth)acrylate, dipropylene glycol di(meth)acrylate, polyethylene glycol di(meth)acrylate, polypropylene glycol di(meth)acrylate, trimethylolpropane tri(meth)acrylate, trimethylolethane tri(meth)acrylate, 1,2,4-cyclohexane tri(meth)acrylate, pentaerythritol tetra(meth)acrylate, dipentaerythritol hexa(meth)acrylate, isooctyl (meth)acrylate, isodecyl (meth)acrylate, stearyl (meth)acrylate, tetrahydroperfuryl (meth)acrylate, phenoxyethyl (meth)acrylate, and isoborneol (meth)acrylate.

Each of the above-exemplified photocurable (meth)acrylate oligomers and monomers may be used alone or in combination of two or more.

The light-transmitting resin may be included in an amount of 1 to 80 wt% based on 100 wt% of the total hard coating composition. When the content of the light-transmitting resin is less than 1 wt%, it is difficult to achieve sufficient hardness improvement, and when it exceeds 80 wt%, there is a problem of severe curling.

The fluorine-based UV-curable functional group-containing compound is a component imparting antifouling, wear resistance, and chemical resistance. The fluorine-based UV-curable functional group-containing compound is not particularly limited as long as it contains fluorine together with UV-curable functional groups and can chemically bond with the light-transmitting resin forming the matrix of the hard coating layer.

As the fluorine-based UV-curable functional group-containing compound, one or more selected from the group consisting of (meth)acrylates containing perfluoroalkyl groups, (meth)acrylates containing perfluoropolyether groups, (meth)acrylates containing perfluoro cyclic aliphatic groups, and (meth)acrylates containing perfluoro aromatic groups can be used. In this case, it is advantageous because it has excellent anti-fouling performance and has excellent durability by forming a chemical bond with the hard coating layer to maintain anti-fouling performance for a long time even after repeated use.

The fluorine-based UV-curable functional group-containing compound preferably has 1 to 6 UV-curable functional groups.

The fluorine-based UV-curable functional group-containing compounds include, for example, 2,2,2-trifluoroethyl acrylate, 2,2,3,3,3-pentafluoropropyl acrylate, 2-perfluorobutylethyl acrylate, 3-perfluorobutyl-2-hydroxypropyl acrylate, 2-perfluorohexylethyl acrylate, 3-perfluorohexyl-2-hydroxypropyl acrylate, 2-perfluorooctylethyl acrylate, 3-perfluorooctyl-2-hydroxypropyl acrylate, 2-perfluorodecylethyl acrylate, 2-perfluoro-3-methylbutylethyl acrylate, 3-perfluoro-3-methoxybutyl-2-hydroxypropyl acrylate, 2-perfluoro-5-methylhexylethyl acrylate, 3-perfluoro-5-methylhexyl-2-hydroxypropyl

EP 4 610 701 A1

acrylate, 2-perfluoro-7-methyloctyl-2-hydroxypropyl acrylate, tetrafluoropropyl acrylate, octafluoropentyl acrylate, dodecafluoroheptyl acrylate, hexadecafluorononyl acrylate, hexafluorobutyl acrylate, 2,2,2-trifluoroethyl methacrylate, 2,2,3,3,3-pentafluoropropyl methacrylate, 2-perfluorobutylethyl methacrylate, 3-perfluorobutyl-2-hydroxypropyl methacrylate, 2-perfluorooctylethyl methacrylate, 3-perfluorooctyl-2-hydroxypropyl methacrylate, 2-perfluorodecylethyl methacrylate, 2-perfluoro-3-methylbutylethyl methacrylate, 3-perfluoro-3-methylbutyl-2-hydroxypropyl methacrylate, 2-perfluoro-5-methylhexylethyl methacrylate, 3-perfluoro-5-methylhexyl-2-hydroxypropyl methacrylate, 2-perfluoro-7-methyloctylethyl methacrylate, 3-perfluoro-6-methyloctyl methacrylate, tetrafluoropropyl methacrylate, octafluoropentyl methacrylate, octafluoropentyl methacrylate, dodecafluoroheptyl methacrylate, hexadecafluoronononyl methacrylate, 1-trifluoromethyltrifluoroethyl methacrylate, hexafluorobutyl methacrylate, triacryloyl-heptadecafluorononenyl-pentaerythritol, and the like.

Commercially available examples of such fluorine-based UV-curable functional group-containing compounds include KY-1203 (Shin-Etsu Silicones), OPTOOL DAC-HP (Daikin), UVAS-2003 (Suyang Chemtech), and the like.

The fluorine-based UV-curable functional group-containing compound may be included in an amount of more than 0.01 and not more than 10 wt% by weight of the total 100 wt% of the hard coating composition. It is preferred if the fluorine-based UV-curable functional group-containing compounds are included within the above ranges, as it is possible to impart excellent wear resistance and antifouling effects. If the content of the fluorine-based UV-curable functional group-containing compound is below the above range, it may be difficult to achieve sufficient wear resistance or antifouling, and if the content exceeds the above range, the hardness and/or scratch resistance properties may be reduced.

In one embodiment of the present invention, the photoinitiator is included for inducing photocuring of the hard coating composition. The photoinitiator may include, for example, a photo-radical initiator capable of forming radicals by light irradiation.

Examples of such photoinitiators include Type 1 initiators, which generate radicals by decomposition of molecules due to differences in chemical structure or molecular binding energy, and Type 2 initiators, which coexist with tertiary amines to induce hydrogen deprotonation.

For example, Type 1 initiators may include acetophenones such as 4-phenoxydichloroacetophenone, 4-t-butyldichloroacetophenone, 4-t-butyltrichloroacetophenone, diethoxyacetophenone, 2-hydroxy-2-methyl-l-phenylpropan-1-one, 1-(4-isopropylphenyl)-2-hydroxy-2-methylpropane-l-one, 1-(4-dodecylphenyl)-2-hydroxy-2-methylpropane-1-one, 4-(2-hydroxyethoxy)-phenyl(2-hydroxy-2-propyl)ketone, and 1-hydroxycyclohexylphenylketone; benzoins such as benzoin, benzoin methyl ether, benzoin ethyl ether, and benzyl dimethyl ketal; phosphine oxides; titanocene compounds; and the like.

For example, Type 2 initiators may include benzophenones such as benzophenone, benzoylbenzoic acid, benzoylbenzoic acid methyl ether, 4-phenylbenzophenone, hydroxybenzophenone, 4-benzole-4'-methyldiphenylsulfide, and 3,3'-methyl-4-methoxybenzophenone; thioxanthones such as thioxanthone, 2-chlorothioxanthone, 2-methylthioxanthone, 2,4-dimethylthioxanthone, isopropylthioxanthone; and the like.

The photoinitiators described above can be used alone or in a mixture of two or more. In addition, the above Type 1 and Type 2 initiators may be used alone or in combination thereof.

The photoinitiator may be included in an amount of about 0.1 to 10 wt%, preferably about 1 to 5 wt%, based on 100 wt% of the total hard coating composition. If the content of the photoinitiator is less than 0.1 wt%, sufficient curing may not occur and the mechanical properties and adhesion of the hard coating film or hard coating layer may not be secured. If the content of the photoinitiator exceeds 10 wt%, poor adhesion, cracking, and curling due to cure shrinkage may result.

The solvent may be used without limitation as long as it is known in the art to be capable of dissolving or dispersing the above-mentioned composition. In addition, the solvent simultaneously serves to provide time for the fluorine-based UV-curable functional group-containing compound to float to the outermost surface of the coating layer due to a difference in surface tension during the process of applying the hard coating composition to the substrate and drying it.

As the solvent, for example, alcohols (methanol, ethanol, isopropanol, butanol, methylcellosolve, ethylcellosolve, etc.), ketones (methylethyl ketone, methylbutyl ketone, methylisobutyl ketone, diethyl ketone, dipropyl ketone, cyclohexanone, etc.), acetates (ethyl acetate, propyl acetate, n-butyl acetate, t-butyl acetate, methylcellosolve acetate, ethylcellosolve acetate, propylene glycol monomethyl ether acetate, propylene glycol monoethyl ether acetate, propylene glycol monopropyl ether acetate, methoxybutyl acetate, methoxypentyl acetate, etc.), hexanes (hexane, heptane, octane, etc.), benzene (benzene, toluene, xylene, etc.), ethers (diethylene glycol dimethyl ether, diethylene glycol diethyl ether, diethylene glycol dipropyl ether, diethylene glycol dibutyl ether, propylene glycol monomethyl ether, etc.) may be preferably used. Each of the above-exemplified solvents can be used alone or in combination of two or more.

Preferably, a good solvent alone or a mixed solvent containing a good solvent and a poor solvent is used as the solvent. The good solvent and poor solvent can be appropriately selected depending on the material of the transparent film used as the base film.

The solvent may be included in an amount of 10 to 95 wt% based on 100 wt% of the total hard coating composition. If the content of the solvent is less than the above content, the viscosity is high, which not only reduces workability, but also makes it impossible to sufficiently progress the swelling of the substrate. Conversely, if it exceeds the above range, the drying process takes a lot of time and is not economical. Also, haze may occur due to severe swelling of the base film. Accordingly, it should be used appropriately within the above range.

The hard coating composition may further comprise inorganic particles.

The inorganic particles may be inorganic nanoparticles, which are added to improve the elastic recovery of the hard coating layer.

Specifically, the inclusion of the inorganic nanoparticles in the hard coating composition may have the advantage of further improving mechanical properties. More specifically, the inorganic nanoparticles are uniformly distributed in the coating film, which has the advantage of improving mechanical properties such as pen pressing and pencil hardness.

The inorganic nanoparticles may have an average particle diameter of 1 to 100nm, particularly 1 to 80nm, and more particularly 5 to 50nm. When the average particle diameter of the inorganic nanoparticles satisfies the above range, it is advantageous to prevent agglomeration from occurring in the composition, thereby enabling the formation of a uniform coating film. Furthermore, it is possible to prevent the optical properties and mechanical properties of the coating film from deteriorating.

The inorganic nanoparticles may include one or more selected from the group consisting of $Al_2O_3$, $SiO_2$, ZnO, $ZrO_2$, $BaTiO_3$, $TiO_2$, $Ta_2O_5$, $Ti_3O_5$, ITO, IZO, ATO, ZnO-Al, $Nb_2O_3$, SnO, and MgO, but are not limited thereto, and may include metal oxides commonly used in the art.

Specifically, the inorganic nanoparticles may be $Al_2O_3$, $SiO_2$ and/or $ZrO_2$. The inorganic nanoparticles can be manufactured or purchased commercially. In the case of commercially available products, the inorganic nanoparticles may be dispersed in an organic solvent at a concentration of 10 to 80 wt%.

The hard coating composition may further comprise a leveling agent to impart smoothness and coatability of the film upon coating with the composition.

The leveling agent can be selected from commercially available silicone-type leveling agents, fluorine-type leveling agents, and acrylic polymer-type leveling agents. For example, BYK-323, BYK-331, BYK-333, BYK-337, BYK-373, BYK-375, BYK-377, and BYK-378 from BYK Chemistry, TEGO Glide 410, TEGO Glide 411, TEGO Glide 415, TEGO Glide 420, TEGO Glide 432, TEGO Glide 435, TEGO Glide 440, TEGO Glide 450, TEGO Glide 455, TEGO Rad 2100, TEGO Rad 2200N, TEGO Rad 2250, TEGO Rad 2300, and TEGO Rad 2500 from Degussa, FC-4430, and FC-4432 from 3M, and the like may be used as the leveling agent. The leveling agent may be included in an amount of 0.1 to 1 wt% based on 100 wt% of the total hard coating composition.

In addition to the above components, the hard coating composition may further comprise components commonly used in the art, such as UV stabilizers, heat stabilizers, antioxidants, lubricants, antifouling agents, and the like.

The UV stabilizer is an additive added for the purpose of protecting the coating film from UV light by blocking or absorbing UV radiation, as the surface of the cured coating film is degraded by continuous exposure to UV radiation, causing discoloration and brittleness. The UV stabilizers are classified into absorbers, quenchers, and hindered amine light stabilizers (HALS) according to their mechanism of action. In addition, they can be categorized into phenyl salicylate (absorber), benzophenone (absorber), benzotriazole (absorber), nickel derivatives (quenchers), and radical scavengers, according to their chemical structure. The UV stabilizers are not particularly limited, provided that they do not significantly change the initial color of the coating.

The heat stabilizers are commercially available, and polyphenol-based primary heat stabilizers and phosphite-based and lactone-based secondary heat stabilizers can be used individually or in combination.

The above UV stabilizers and heat stabilizers can be used in appropriate amounts without affecting the UV curability.

The hard coating layer can be prepared by applying the hard coating composition to one side of the base resin layer, drying it, and then UV curing it.

The hard coating composition can be coated on the base resin layer using any suitable method known in the art, such as a die coater, air knife, reverse roll, spray, blade, casting, gravure, micro gravure, spin coating, and the like.

After the hard coating composition is applied on the base resin layer, it is dried by evaporating volatiles at a temperature of 30 to 150°C for 10 seconds to 1 hour, more specifically 30 seconds to 30 minutes, and then cured by irradiation with UV light. The irradiation amount of the UV light may be specifically about 0.01 to 10J/cm2, more specifically 0.1 to 2J/cm2.

At this time, the thickness of the hard coating layer formed may be specifically 1 to 10μm, more specifically 3 to 10μm. When the thickness of the hard coating layer is within the above range, excellent hardness, bending resistance, and curl properties can be obtained.

One embodiment of the present invention relates to an image display device having the optical laminate described above. For example, the optical laminate of the present invention can be used as a window of an image display device, in particular a flexible display, a foldable display, a rollable display, or a stretchable display. Furthermore, the optical laminate of the present invention can be used by attaching it to polarizing plates, touch sensors, and the like.

The optical laminate according to one embodiment of the present invention can be used for reflective, transmissive and transflective LCDs, or LCDs of various driving types such as TN, STN, OCB, HAN, VA and IPS. The optical laminate according to one embodiment of the present invention can also be used for various image display devices such as plasma displays, field emission displays, organic EL displays, inorganic EL displays, electronic paper, etc.

One embodiment of the present invention relates to a transmittance tunable optical laminate comprising an optical laminate as described above.

The transmittance tunable optical laminate has a laminated structure in which a polarizing plate and a liquid crystal layer are disposed on the inside, and transparent members are disposed on the outside on both sides to protect the polarizing plate and the liquid crystal layer. In the transmittance tunable optical laminate according to the present invention, the above-described optical laminate is used as the transparent member. Hence, the optical laminate is forming the transparent members.

Further, one embodiment of the invention relates to a smart window comprising the transmittance tunable optical laminate.

Hereinafter, the present invention will further be described more specifically by means of examples, comparative examples, and experimental examples. These examples, comparative examples, and experimental examples are intended to illustrate the present invention only, and it is obvious to those skilled in the art that the scope of the present invention is not limited to them.

Preparation Example **1:** Preparation of Composition for Forming Primer Layer

After 22.67 wt% of a waterborne polyurethane dispersion (hereinafter, PUD) (T&L, Akuarane 3410, 30 wt% solids), 77.08 wt% of ethyl alcohol, and 0.1 wt% of a silicone-based leveling agent (BYK, BYK-333) were diluted using a stirrer, 0.075 wt% of a primary stabilizer (Adeka, STAB AO-80) and 0.075 wt% of a secondary stabilizer (Adeka, STAB 135A) were further added and stirred to prepare a composition for forming a primer layer.

Preparation Example **2-1:** Preparation of Composition for Forming Base Resin Layer

Under a nitrogen gas atmosphere, 14.67 g (45.8 mmol) of 2,2'-bis(trifluoromethyl)benzidine (TFMB) and 233.3 g of N,N-dimethylacetamide (DMAc) with a water content adjusted to 200 ppm were added to a 1L separable flask equipped with a stirring wing, and the TFMB was dissolved in the DMAc under stirring at room temperature. Next, 4.283 g (13.8 mmol) of 4,4'-oxydiphthalic acid dianhydride (OPDA) was added to the flask and stirred at room temperature for 16.5 hours. Then, 1.359 g (4.61 mmol) of 4,4'-oxybis(benzoyl chloride) (OBBC) and 5.609 g (27.6 mmol) of terephthaloyl chloride (TPC) were added to the flask and stirred at room temperature for 1 hour. Next, 4.937 g (48.35 mmol) of anhydrous acetic acid and 1.501 g (16.12 mmol) of 4-picoline were added to the flask, stirred at room temperature for 30 min, then warmed to 70°C with an oil bath, and stirred for another 3 hours to give the reaction solution.

After cooling the resulting reaction solution to room temperature, 360 g of methanol and 170 g of ion-exchange water were added to give a precipitate of polyamideimide. It was immersed in methanol for 12 hours, recovered by filtration and washed with methanol. Next, the precipitate was dried under reduced pressure at 100°C to obtain a polyamideimide resin.

To the obtained polyamideimide resin, N,N-dimethylacetamide (DMAc) was added to give a concentration of 15 wt% to prepare a composition for forming a base resin layer.

**Preparation Example 2-2: Preparation of Composition for Forming Base Resin Layer**

Under a nitrogen gas atmosphere, 45 g (140.5 mmol) of 2,2'-bis(trifluoromethyl)benzidine (TFMB) and 600.9 g of N,N-dimethylacetamide (DMAc) with a water content adjusted to 200 ppm were added to a 1L separable flask equipped with a stirring wing, and the TFMB was dissolved in the DMAc under stirring at room temperature. Next, 4.14 g (14.1 mmol) of 3,3',4,4'-biphenyltetracarbonic acid dianhydride (BPDA) was added to the flask and stirred at room temperature for 2.5 hours. Then, 25.01 g (56.3 mmol) of 4,4'-(hexafluoroisopropylidene)diphthalic acid anhydride was added and stirred at room temperature for 15 hours. Then, 4.15 g (14.1 mmol) of 4,4'-oxybis(benzoyl chloride) (OBBC) and 11.43 g (56.3 mmol) of terephthaloyl chloride (TPC) were added to the flask and stirred at room temperature for 1 hour. Next, 21.55 g (211.1 mmol) of anhydrous acetic acid and 3.28 g (35.2 mmol) of 4-picoline were added to the flask, stirred at room temperature for 30 min, then warmed to 70°C with an oil bath, and stirred for another 3 hours to give the reaction solution.

After cooling the resulting reaction solution to room temperature, 647 g of methanol and 180 g of ion-exchange water were added to give a precipitate of polyamideimide. It was immersed in methanol for 12 hours, recovered by filtration and washed with methanol. Next, the precipitate was dried under reduced pressure at 100°C to obtain a polyamideimide resin.

To the obtained polyamideimide resin, N,N-dimethylacetamide (DMAc) was added to give a concentration of 15 wt% to prepare a composition for forming a base resin layer.

Preparation Example 3: Preparation of Hard Coating Composition

23 parts by weight of hexafunctional urethane acrylate (UA-306I, Kyoeisha), 23 parts by weight of dendritic acrylate (Miramer SP1106, Miwon Specialty Chemicals), 50 parts by weight of methyl ethyl ketone, 3.5 parts by weight of 1-hydroxycyclohexyl phenyl ketone, 0.5 parts by weight of a fluorine-based UV-curable functional group-containing compound (KY-1203, Shin-Etsu Silicones) were mixed using a stirrer and filtered using a PP filter to prepare a hard coating composition.

Preparation Example 4: Preparation of Adhesion Sheet

A monomer mixture containing 40 wt% 2-ethylhexyl acrylate (2-EHA), 40 wt% isobornyl acrylate (IBOA), 10 wt% dihydrodicyclopentadienyl acrylate (DCPA), and 10 wt% 2-hydroxyethyl acrylate (2-HEA), adjusted to 20 wt% solids, was placed in a 1L reactor with ethyl acetate (EA) as solvent.

Oxygen was removed by purging with nitrogen gas for 1 hour and maintained at 80°C. After the monomer mixture was homogeneously mixed, 0.07 parts by weight of azobisisobutyronitrile (AIBN) was added as a reaction initiator and reacted for 8 hours to prepare an acrylic random copolymer.

An adhesive composition was prepared by adding 10 parts by weight of the adhesion imparting agent CL-467 (trimethylolpropane tris(2-methyl-1-aziridinepropionate), Menadiona) and 0.1 part by weight of the silane coupling agent KBM-403 (3-glycidoxypropyltrimethoxysilane, Shin-Etsu) to 100 parts by weight of the acrylic random copolymer prepared in this manner, and stirring for 30 minutes.

The prepared adhesive composition was applied on a 75 $\mu$m release film coated with a silicone release agent to be a thickness of 25 $\mu$m after drying, dried at 120°C for 5 minutes, and then laminated with the 75 $\mu$m release film coated with the silicone release agent to prepare an adhesive sheet.

**Examples 1 to 4 and Comparative Examples 1 to 3: Manufacture of Optical Laminates**

Optical laminates were manufactured with the lamination structure shown in FIG. 1.

As a glass substrate, an ultra-thin glass having the thickness shown in Table 2 below was prepared.

To perform a dipping coating on four sides of the ultra-thin glass, a certain amount of the composition for forming a primer layer of Preparation Example 1 above was filled in a water bath. All four sides of the ultra-thin glass were dipped into the composition for forming a primer layer of Preparation Example 1 for about 1 mm, and then immediately removed and dried in an oven at 120°C for 2 minutes to form a primer layer such that the thickness after drying was the thickness shown in Table 2 below.

Thereafter, a 25 $\mu$m thermosensitive adhesive (Nitta, CS2325NA4) was bonded to one surface of the ultra-thin glass, which was again attached to a reinforcing glass having a thickness of 3T and being larger than the glass substrate. Then, the composition for forming a primer layer of Preparation Example 1 was applied to another surface of the ultra-thin glass so that the thickness after drying became the thickness shown in Table 2 below, and dried in an oven at 120°C for 2 minutes to form a primer layer on the upper surface of the ultra-thin glass.

Then, the composition for forming a base resin layer of Preparation Example 2-1 was applied on the primer layer to cover the top and side surfaces of the primer layer using an applicator so that the thickness after drying was the thickness shown in Table 2 below, and a base resin layer was formed by drying in an 80°C oven for 1 hour and in a 210°C oven for 1 hour.

Thereafter, the hard coating composition of Preparation Example 3 was applied to the upper surface of the base resin layer so that the thickness after drying was the thickness shown in Table 2 below, and dried in an oven at 80°C for 2 minutes and irradiated with UV light at an accumulated dose of 600 mJ/cm$^2$ under a nitrogen atmosphere to form a functional coating layer.

The optical laminate was then placed on a -20°C plate for 5 minutes to reduce the adhesion of the thermosensitive adhesive to peel off from the reinforcing glass. Afterward, the functional coating layer was cut with a CO2 laser (LCP-C600, Laser & Physics) at 30% power and 700 mm/s speed with an offset of 500 $\mu$m from the end of the ultra-thin glass to manufacture an optical laminate with protected side surfaces.

Table 2

| | Thickness of functional coating layer ($\mu$m) | Thickness of base resin layer ($\mu$m) | Thickness of primer layer ($\mu$m) | Thickness of glass substrate ($\mu$m) |
|---|---|---|---|---|
| Example 1 | 5 | 5.0 | 0.5 | 90 |
| Example 2 | 5 | 5.0 | 0.5 | 30 |

(continued)

| | Thickness of functional coating layer (μm) | Thickness of base resin layer (μm) | Thickness of primer layer (μm) | Thickness of glass substrate (μm) |
|---|---|---|---|---|
| Example 3 | 5 | 20.0 | 0.5 | 90 |
| Example 4 | 5 | 14.5 | 0.5 | 50 |
| Comparative Example 1 | 3 | 5.0 | 0.5 | 90 |
| Comparative Example 2 | 5 | 25.0 | 0.5 | 90 |
| Comparative Example 3 | 5 | 17.0 | 0.5 | 50 |

**Example 5: Manufacture of Optical Laminate**

An optical laminate was manufactured by performing the same as Example 3, except that the composition for forming a base resin layer of Preparation Example 2-2 was used instead of the composition for forming a base resin layer of Preparation Example 2-1.

**Example 6: Manufacture of Optical Laminate**

An optical laminate was manufactured with the lamination structure shown in FIG. 2.

As a glass substrate, an ultra-thin glass having the thickness of 90μm was prepared.

To perform a dipping coating on four sides of the ultra-thin glass, a certain amount of the composition for forming a primer layer of Preparation Example 1 above was filled in a water bath. All four sides of the ultra-thin glass were dipped into the composition for forming a primer layer of Preparation Example 1 for about 1 mm, and then immediately removed and dried in an oven at 120°C for 2 minutes to form a primer layer with the thickness of 0.5 μm after drying.

Then, a 25 μm thermosensitive adhesive (Nitta, CS2325NA4) was bonded to one surface of the ultra-thin glass, which was again attached to a reinforcing glass having a thickness of 3T and being larger than the glass substrate. Then, the composition for forming a primer layer of Preparation Example 1 was applied to another surface of the ultra-thin glass to have the thickness of 0.5 μm after drying, and dried in an oven at 120°C for 2 minutes to form a primer layer on the upper surface of the ultra-thin glass.

Then, the composition for forming a base resin layer of Preparation Example 2 was applied on the primer layer to cover the top and side surfaces of the primer layer using an applicator to have the thickness of 12 μm after drying, and a base resin layer was formed by drying in an 80°C oven for 1 hour and in a 210°C oven for 1 hour.

The optical laminate was then placed on a -20°C plate for 5 minutes to reduce the adhesion of the thermosensitive adhesive to peel off from the reinforcing glass. Thereafter, the reinforcing glass was bonded on the base resin layer using the thermosensitive adhesive.

Then, a primer layer was formed on the remaining surface of the ultra-thin glass in the same manner as described above to form a thickness of 0.5 μm after drying, followed by a base resin layer to form a thickness of 11.5 μm after drying.

Thereafter, the hard coating composition of Preparation Example 3 was applied to the base resin layer present on the upper surface of the glass substrate to have the thickness of 5 μm after drying, and dried in an oven at 80°C for 2 minutes and irradiated with UV light at an accumulated dose of 600 mJ/cm$^2$ under a nitrogen atmosphere to form a functional coating layer.

Lastly, the optical laminate was placed on a -20°C plate for 5 minutes to reduce the adhesion of the thermosensitive adhesive to peel off from the reinforcing glass. Afterward, the functional coating layer was cut with a CO2 laser (LCP-C600, Laser & Physics) at 30% power and 700 mm/s speed with an offset of 500 μm from the end of the ultra-thin glass to manufacture an optical laminate with protected side surfaces.

**Comparative Example 4: Manufacture of Optical Laminate**

As a glass substrate, an ultra-thin glass having the thickness of 90μm was prepared.

The hard coating composition of Preparation Example 3 was applied to a 30 μm thick polyamideimide film (PAI, Sumitomo Chemical) so that the thickness became 5 μm after drying, and dried in an oven at 80°C for 2 minutes and irradiated with UV light at an accumulated dose of 600 mJ/cm$^2$ under a nitrogen atmosphere to form a functional coating layer.

Then, the release film of the adhesive sheet of Preparation Example 4 was peeled off and bonded to the surface where the functional coating layer of the polyamideimide film was not formed using a laminator. The functional coating film including the adhesive layer thus produced was cut 1 mm larger than the size of the glass substrate with a supercutter, and the remaining release film was peeled off and bonded to one surface of the glass substrate with a laminator to manufacture an optical laminate including the glass substrate.

**Comparative Example 5: Manufacture of Optical Laminate**

As a glass substrate, an ultra-thin glass having the thickness of 90μm was prepared.

The composition for forming a primer layer of Preparation Example 1 was applied to one surface of the ultra-thin glass to a thickness of 0.5μm after drying, and dried in an oven at 120°C for 2 minutes to form a primer layer. Then, the composition for forming a base resin layer of Preparation Example 2 was applied on the primer layer using an applicator to form a thickness of 20 μm after drying, and dried in an 80°C oven for 1 hour and in a 210°C oven for 1 hour to form a base resin layer. Then, the hard coating composition of Preparation Example 3 was applied on the base resin layer to form a thickness of 5 μm after drying, dried in an oven at 80°C for 2 minutes, and irradiated with UV light at an accumulated dose of 600 mJ/cm$^2$ under a nitrogen atmosphere to form a functional coating layer to manufacture an optical laminate including the glass substrate.

**Experimental Example 1:**

The properties of the optical laminates manufactured in the above examples and comparative examples were measured by the methods described below, and the results are shown in Table 3 and Table 4 below. Further, the value of d2/d1 was calculated and shown in Table 3 below, where d1 is the thickness of the glass substrate and d2 is the total thickness of the primer layer, the base resin layer, and the functional coating layer. In addition, the total thickness of the optical laminate was also calculated and shown in Table 3 below.

**(1) Elastic modulus of base resin layers**

Each of the compositions for forming a base resin layer of Preparation Examples 2-1 to 2-2 above was applied on the glass using an applicator to have a thickness of 20 μm after drying. Then, after drying in an 80°C oven for 1 hour and in a 210°C oven for 1 hour to form a base resin layer, the base resin layer was peeled off to obtain only the base resin layer.

The resulting resin layer was made into a test specimen for tensile evaluation using a super cutter according to the JIS-K7139 bar-type specification. The elastic modulus (GPa) of the specimen was measured in the tensile evaluation mode of the universal testing machine at a tensile speed of 4mm/min.

**(2) Pencil hardness**

After fixing the optical laminate with the hard coating layer face up, the pencil hardness was measured under a 750gf load. A pencil of the same hardness was used to perform five tests with 1cm length, and the hardness that was OK four or more times was expressed as the pencil hardness.

In addition, the pencil hardness measurement shows 'OK' if the glass substrate of the optical laminate does not break under a load of 750gf, and 'NG' if it does.

**(3) Bending resistance**

Mandrel test was performed with a curvature radius of 3mm to observe whether the optical laminate fractures when the hard coating layer is folded inward. The bending resistance was evaluated according to the following evaluation criteria:

OK: No fracture of the optical laminate
NG: Optical laminate fracture occurred

**(4) Curl property**

Optical laminates measuring 10 cm × 10 cm were manufactured, and the lifting of each corner from the floor was measured after being left for 24 hours at 25°C, 48 RH%. The curl property was evaluated according to the following evaluation criteria:

OK: The average height of the four corners is 3mm or less
NG: The average height of the four corners is more than 3mm.

**(5) Border area coating uniformity**

The total thickness of the primer layer, base resin layer, and functional coating layer, excluding the glass substrate, was measured using a thickness gauge to obtain the coating uniformity (%) according to equation below.

$$Coating\ uniformity(\%) = \left|\frac{a-b}{a}\right| \times 100$$

where, a is the average value of the thicknesses of 4 points in the center, and b is the average value of the thicknesses of 4 points in the corners of the border area.

The border area means an area within 3 mm from the end of the glass substrate.

The coating uniformity of the border area was evaluated according to the following evaluation criteria:

OK: Coating uniformity (%) value is 10% or less

NG: Coating uniformity (%) value exceeds 10%.

**(6) Side protection**

The sides of the optical laminates were observed under an optical microscope to confirm the presence of the coating layer and evaluated according to the following evaluation criteria:

∘: Coating layer present on the side

✕: No coating layer present on the side

**(7) Shatterproof performance**

A 0.7mm ballpoint pen (Monami, FX Zeta) was dropped from 10cm above the optical laminate in a free fall and impacted within the border area, which is the area within 3mm from the end of the glass substrate, to check whether the glass substrate is broken or not, and evaluated according to the following evaluation criteria:

OK: There is no breakage of in the border area of the glass substrate, or even in case of breakage, the broken fragments (crumbs) are fixed to the base resin layer and functional coating layer and do not shatter.

NG: The border area of the glass substrate is broken, and the broken fragments (crumbs) are delaminated from the base resin layer or functional coating layer and shattered.

Table 3

| | Thick ness ratio (d2/d1 ) | Total thickness of optical laminate (μm) | Elastic modulus of base resin layer (GPa) | Pen cil hard ness | State of glass substrate after pencil hardness measurement | Bend ing resist ance | Curl pro pert y |
|---|---|---|---|---|---|---|---|
| Exampl e 1 | 0.12 | 100.5 | 5.2 | 4H | OK | OK | OK |
| Exampl e 2 | 0.35 | 40.5 | 5.2 | 4H | OK | OK | OK |
| Exampl e 3 | 0.28 | 115.5 | 5.2 | 2H | OK | OK | OK |
| Exampl e 4 | 0.40 | 70 | 5.2 | 3H | OK | OK | OK |
| Exampl e 5 | 0.28 | 115.5 | 4.6 | 2H | OK | OK | OK |
| Exampl e 6 | 0.33 | 119.5 | 5.2 | 2H | OK | OK | OK |
| Compar ative Exampl e 1 | 0.09 | 98.5 | 5.2 | - | NG | OK | OK |
| Compar ative Exampl e 2 | 0.34 | 120.5 | 5.2 | 4H | OK | NG | OK |
| Compar ative Exampl e 3 | 0.45 | 72.5 | 5.2 | 4H | OK | OK | NG |

(continued)

|  | Thick ness ratio (d2/d1 ) | Total thickness of optical laminate ($\mu$m) | Elastic modulus of base resin layer (GPa) | Pen cil hard ness | State of glass substrate after pencil hardness measurement | Bend ing resist ance | Curl pro pert y |
|---|---|---|---|---|---|---|---|
| Compar ative Exampl e 4 | - | 150 | - | 2B | NG | OK | OK |
| Compar ative Exampl e 5 | 0.28 | 115.5 | 5.2 | 2H | OK | OK | OK |

Table 4

|  | Coating uniformity of edge area | Side protection | Shatterproof performance |
|---|---|---|---|
| Example 1 | OK | ○ | OK |
| Example 2 | OK | ○ | OK |
| Example 3 | OK | ○ | OK |
| Example 4 | OK | ○ | OK |
| Example 5 | OK | ○ | OK |
| Example 6 | OK | ○ | OK |
| Comparative Example 1 | OK | ○ | NG |
| Comparative Example 2 | OK | ○ | OK |
| Comparative Example 3 | OK | ○ | OK |
| Comparative Example 4 |  | X | OK |
| Comparative Example 5 | NG | X | NG |

As shown in Table 3 above, it can be seen that the optical laminates of Examples 1 to 6, in which the primer layer, the base resin layer, and the functional coating layer are formed on an ultra-thin glass having a thickness of less than 100 $\mu$m in accordance with the present invention so that the d2/d1 value, which is the ratio of the total thickness d2 of the primer layer, the base resin layer, and the functional coating layer to the thickness d1 of the glass base, is controlled to be 0.1 to 0.4, have excellent pencil hardness properties while securing bending resistance and curl properties.

On the other hand, as shown in Table 3 above, the optical laminate of Comparative Example 1 having a d2/d1 value of less than 0.1 has poor hardness properties to the extent that the lower glass substrate breaks when measuring the pencil hardness properties, and the optical laminate of Comparative Example 3 having a d2/d1 value of more than 0.4 cannot simultaneously secure pencil hardness properties, bending resistance, and curl properties. Furthermore, it was found that the optical laminate of Comparative Example 2, in which the total thickness of the optical laminate is 120 $\mu$m or more, cannot secure bending resistance.

Furthermore, as shown in Table 4 above, it can be seen that the optical laminates of Examples 1 to 6 having a structure in which the primer layer is formed on the glass substrate to cover the upper and side surfaces of the glass substrate according to the present invention, and the base resin layer is formed on the primer layer to cover the upper and side surfaces of the primer layer, have excellent border area coating uniformity, and the sides of the glass substrate are protected so that the glass substrate is prevented from breaking due to an external impact applied to the sides, or even if it breaks, the shattering of glass fragments is prevented.

On the other hand, as shown in Table 4 above, the optical laminate of Comparative Example 5, which has a structure in which the primer layer is formed only on the upper surface of the glass substrate and the resin layer is formed only on the upper surface of the primer layer, has a poor coating uniformity in the border area and the sides of the glass substrate are not protected, so that the glass substrate is broken by an external impact applied to the sides, or if broken, shattering of glass fragments occurs.

Meanwhile, as shown in Table 3 and Table 4 above, it can be seen that the optical laminate of Comparative Example 4 of the structure in which the functional coating film is bonded to the glass substrate by an adhesive layer, the side of the glass substrate is not protected, the overall thickness of the optical laminate is thicker than 120 $\mu$m, and the pencil hardness is reduced.

Although particular embodiments of the present invention have been shown and described, it will be understood by those skilled in the art that it is not intended to limit the present invention to the preferred embodiments, and it will be obvious to those skilled in the art that various changes and modifications may be made without departing from the spirit and scope of the invention.

The scope of the present invention, therefore, is to be defined by the appended claims and equivalents thereof.

**Reference numbers**

| 110 | Glass substrate |
|-----|-----------------|
| 120 | Primer layer |
| 130 | Base resin layer |
| 140 | Functional coating layer |

**Claims**

1. An optical laminate comprising:

   a glass substrate;
   a primer layer formed on the glass substrate to cover an upper surface and side surfaces of the glass substrate;
   a base resin layer formed on the primer layer to cover an upper surface and side surfaces of the primer layer; and
   a functional coating layer formed on the base resin layer, wherein
   the glass substrate is an ultra-thin glass having a thickness of less than 100 $\mu$m, the optical laminate has a pencil hardness of 2H or more throughout the optical laminate, and
   the optical laminate satisfies equation:

$$0.1 \leq d2/d1 \leq 0.4$$

   wherein,

      d1 is a thickness of the glass substrate, and
      d2 is a total thickness of the primer layer, base resin layer, and functional coating layer.

2. The optical laminate according to claim 1, wherein the primer layer is formed to cover an entire surface of the glass substrate.

3. The optical laminate according to claim 1 or claim 2, wherein the base resin layer is formed to cover an entire surface of the primer layer.

4. The optical laminate according to any of previous claims, wherein a total thickness of the optical laminate is less than 120 $\mu$m.

5. The optical laminate according to any of previous claims, wherein the primer layer is formed from a composition for forming a primer layer comprising a waterborne polyurethane resin and a stabilizer, wherein the stabilizer comprises a primary heat stabilizer and a secondary heat stabilizer.

6. The optical laminate according to claim 5, wherein the primary heat stabilizer is at least one selected from a phenol-based heat stabilizer and an amine-based heat stabilizer, and the secondary heat stabilizer is at least one selected from a phosphorus-based heat stabilizer and a sulfur-based heat stabilizer.

7. The optical laminate according to any of previous claims, wherein the base resin layer is formed from a composition for forming a base resin layer comprising at least one resin among a polyimide resin and a polyamideimide resin.

8. The optical laminate according to any of previous claims, wherein the base resin layer has an elastic modulus of 3.3 to 5.2 GPa.

Fig. 1

Fig. 2

Europäisches
Patentamt
European
Patent Office
Office européen
des brevets

# EUROPEAN SEARCH REPORT

**Application Number**

EP 25 16 0733

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2022 058298 A (DAINIPPON PRINTING CO LTD) 11 April 2022 (2022-04-11) | 1-8 | INV.<br>G02B1/14 |
| Y | * paragraphs [0010], [0016], [0036] - [0110], [0132] - [0146], [0147] - [0224], [0231] - [0239], [0271] - [0279]; figures 1, 7, 11, 12; table 1 * | 1-8 | G02B1/18<br>B32B17/10<br>B32B27/08<br>C08G73/10<br>C09D179/08 |
| Y | JP 2022 051295 A (DAINIPPON PRINTING CO LTD) 31 March 2022 (2022-03-31) * paragraphs [0002] - [0011], [0041] - [0050], [0072] - [0221], [0328] - [0336]; figure 1 * | 1-8 | G09F9/30<br>C03C17/34 |
| A | WO 2022/239648 A1 (OKURA INDUSTRIAL CO LTD [JP]) 17 November 2022 (2022-11-17) * paragraphs [0014], [0039]; claims 1-7 * | 5,6 | |
| A | US 2017/253707 A1 (LIM GEO SAN [KR] ET AL) 7 September 2017 (2017-09-07) * paragraph [0086] * | 5,6 | |
| A | US 2012/196103 A1 (MURASHIGE TAKESHI [JP] ET AL) 2 August 2012 (2012-08-02) * the whole document * | 1-8 | **TECHNICAL FIELDS SEARCHED (IPC)**<br>G02B<br>B32B<br>C03C |
| A | US 2023/311456 A1 (AMIE TAKASHI [JP] ET AL) 5 October 2023 (2023-10-05) * the whole document * | 1-8 | C08G<br>C09D<br>G09F |
| A | US 2021/120691 A1 (SU ZHAOLIANG [CN] ET AL) 22 April 2021 (2021-04-22) * the whole document * | 1-8 | |

The present search report has been drawn up for all claims

| Place of search | Date of completion of the search | Examiner |
|---|---|---|
| Munich | 7 July 2025 | Knorn, Raphaela |

EPO FORM 1503 03.82 (P04C01)

## ANNEX TO THE EUROPEAN SEARCH REPORT
## ON EUROPEAN PATENT APPLICATION NO.

EP 25 16 0733

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2025

| Patent document cited in search report | | Publication date | Patent family member(s) | | Publication date |
|---|---|---|---|---|---|
| JP 2022058298 | A | 11-04-2022 | NONE | | |
| JP 2022051295 | A | 31-03-2022 | JP | 7547892 B2 | 10-09-2024 |
| | | | JP | 2022051295 A | 31-03-2022 |
| | | | JP | 2024123012 A | 10-09-2024 |
| | | | JP | 2024123013 A | 10-09-2024 |
| WO 2022239648 | A1 | 17-11-2022 | JP | WO2022239648 A1 | 17-11-2022 |
| | | | TW | 202302364 A | 16-01-2023 |
| | | | WO | 2022239648 A1 | 17-11-2022 |
| US 2017253707 | A1 | 07-09-2017 | CN | 107153226 A | 12-09-2017 |
| | | | JP | 2017156751 A | 07-09-2017 |
| | | | US | 2017253707 A1 | 07-09-2017 |
| US 2012196103 | A1 | 02-08-2012 | CN | 102574736 A | 11-07-2012 |
| | | | CN | 108437586 A | 24-08-2018 |
| | | | EP | 2492250 A1 | 29-08-2012 |
| | | | EP | 2918562 A1 | 16-09-2015 |
| | | | EP | 3381876 A1 | 03-10-2018 |
| | | | JP | 5416546 B2 | 12-02-2014 |
| | | | JP | 2011088789 A | 06-05-2011 |
| | | | KR | 20120073286 A | 04-07-2012 |
| | | | TW | 201130648 A | 16-09-2011 |
| | | | US | 2012196103 A1 | 02-08-2012 |
| | | | WO | 2011048861 A1 | 28-04-2011 |
| US 2023311456 | A1 | 05-10-2023 | CN | 115428058 A | 02-12-2022 |
| | | | JP | 7597106 B2 | 10-12-2024 |
| | | | JP | 2025037969 A | 18-03-2025 |
| | | | JP | WO2021177288 A1 | 10-09-2021 |
| | | | KR | 20220148888 A | 07-11-2022 |
| | | | TW | 202141131 A | 01-11-2021 |
| | | | US | 2023311456 A1 | 05-10-2023 |
| | | | WO | 2021177288 A1 | 10-09-2021 |
| US 2021120691 | A1 | 22-04-2021 | CN | 111599268 A | 28-08-2020 |
| | | | CN | 113888968 A | 04-01-2022 |
| | | | EP | 3796292 A1 | 24-03-2021 |
| | | | US | 2021120691 A1 | 22-04-2021 |
| | | | WO | 2020168748 A1 | 27-08-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1019990042313